(19) Europäisches Patentamt
European Patent Office
Office européen des brevets

(11) **EP 1 477 210 B1**

(12) **EUROPEAN PATENT SPECIFICATION**

(45) Date of publication and mention
of the grant of the patent:
**11.07.2007 Bulletin 2007/28**

(51) Int Cl.:
**A63F 13/00** *(2006.01)*

(21) Application number: **04003005.8**

(22) Date of filing: **11.02.2004**

(54) **Game apparatus and storage medium having game program recorded therein**

Spielgerät und Speichermedium mit darauf gespeichertem Spielprogramm

Appareil de jeu et support d'enregistrement dans lequel est stocké le programme de jeu

(84) Designated Contracting States:
**DE FR GB**

(30) Priority: **30.04.2003 JP 2003125434**

(43) Date of publication of application:
**17.11.2004 Bulletin 2004/47**

(73) Proprietor: **Nintendo Co., Limited
Minami-ku,
Kyoto 601-8501 (JP)**

(72) Inventor: **Bando, Taro
Minami-ku
Kyoto 601-8501 (JP)**

(74) Representative: **Altenburg, Udo
Patent- und Rechtsanwälte
Bardehle . Pagenberg . Dost .
Altenburg - Geissler
Galileiplatz 1
81679 München (DE)**

(56) References cited:
**WO-A-02/11838**          **US-A- 5 734 726**

• **PATENT ABSTRACTS OF JAPAN vol. 1997, no. 03, 31 March 1997 (1997-03-31) & JP 08 292785 A (MARUSHIN KOGYO KK), 5 November 1996 (1996-11-05)**

**Description**

BACKGROUND OF THE INVENTION

Field of the Invention

The present invention relates to a game apparatus, which generates the sound of movement in accordance with an action of an object which is moved in a game, and also relates to a storage medium having a program of the game recorded therein. More particularly, the present invention relates to a game apparatus, which generates the sound of an engine in accordance with a traveling action of a car object of a racing game in which the car object travels on a course in accordance with at least the player's accelerator operation, and also relates to a storage medium having a program of the racing game recorded therein.

Description of the Background Art

Conventionally, in a video game such as a racing game, the sound of an engine is reproduced in accordance with a traveling action of a car object traveling in a game space and/or the number of revolutions of the engine. In this conventional method for reproducing the sound of the engine, the sound of a real engine is previously recorded under prescribed driving conditions, and data of the recorded sound is loop-reproduced (i.e., reproduced repeatedly), while raising or lowering the frequency of the sound data in accordance with an increase or decrease in revolution speed of the engine of the car object during the game. However, when the frequency of a recorded waveform is changed, the sound quality tends to considerably differ from the original sound quality. Accordingly, for example, "Mario Cart 64™" developed by the present applicants employs such an improved technique as to crossfade between a previously registered sound of the engine at low speeds (a loop waveform of about one second) and a previously registered sound of the engine at high speeds (a loop waveform of about one second).

US-A-5734726 discloses a device and method for simulation the acceleration and deceleration sounds of an engine, whereby multiple sound segments are stored in memory. While the user is operating the device an acceleration or deceleration sound is produced respective to the users input, the device will match the acceleration or deceleration sound using a "jump vector" to a further sound segment, so that when the user alters their input a realistic sound is maintained by jumping to the matched sound segment.

In a method as disclosed in Japanese Patent Laid-Open Publication No. 2000-10576, a waveform is previously stored as sound data for each of a plurality of ranges previously obtained by dividing each running state of the engine by a unit of length of time corresponding to one combustion cycle of rotation of the engine's crankshaft. In technology disclosed in Japanese Patent Laid-Open Publication No. 2000-10576, the sound level or the pitch of the waveform of the previously stored sound data is changed (i.e., a reproduction rate is increased or decreased) in accordance with the number of revolutions of the engine in a game space, such that simulated sound, which is closer to the sound of a real engine, can be generated using a small storage space.

However, there is a drawback in the technique which crossfades between a previously registered sound of an engine at low speeds and a previously registered sound of an engine at high speeds, because overlapping of these sounds results in impure sound quality. This technique, as well as the technique disclosed in Japanese Patent Laid-Open Publication No. 2000-10576, merely artificially replicate the sound of a real engine, and therefore the sound quality tends to considerably differ from the original sound quality. The sound of a real engine contains, for example, resonant sounds characteristic to the number of revolutions of the engine, sounds of intake and exhaust, mechanical sounds which are variable depending on the condition of load on the engine, and so on. However, these sounds contained in the real engine's sound cannot be accurately replicated by reproducing a simulated sound.

SUMMARY OF THE INVENTION

Therefore, an object of the present invention is to provide a game apparatus as shown in cls. 1-10 capable of reproducing the sound of an engine which is close to a real engine's sound, and a storage medium as shown in claims 11-20 having recorded therein a game program for use in such a game apparatus.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is an external view for explaining game systems according to first and second embodiments of the present invention;

FIG. 2 is a functional block diagram of a game apparatus 3 shown in FIG. 1 ;

FIG. 3 is a schematic memory map for explaining exemplary programs and data to be stored in a main memory 33 shown in FIG. 2;

FIG. 4A is a graph showing an example of acceleration sound data to be previously obtained;

FIG. 4B is a graph for explaining exemplary conditions for previously obtaining the acceleration sound data shown in FIG. 4A;

FIG. 5A is a graph showing an example of deceleration sound data to be previously obtained;

FIG. 5B is a graph for explaining the exemplary conditions for previously obtaining the deceleration sound data shown in FIG. 5A;

FIG. 6 is a schematic memory map of an ARAM 35 shown in FIG. 2, having stored therein the acceleration sound and the deceleration sound data which are shown in FIGs. 4A and 5A, respectively;

FIG. 7 is a flowchart illustrating the procedure of an engine sound reproduction process performed by the game apparatus 3 shown in FIG. 1 in accordance with the first embodiment;

FIG. 8 is a graph for explaining acceleration and deceleration sound data to be used when a car object in an idling state accelerates to maximum speed $v_{max}$ and thereafter decelerates back into the idling state in accordance with the procedure of the flowchart of FIG. 7;

FIG. 9 is a graph for explaining acceleration and deceleration sound data to be used when a car object in an idling state accelerates to speed $v_1$ lower than maximum speed $v_{max}$, temporarily decelerates to speed $v_2$ ($v_2 < v_1$), and thereafter reaccelerates to the maximum speed $v_{max}$ in accordance with the procedure of the flowchart of FIG. 7; and

FIG. 10 is a flowchart illustrating the procedure of an engine sound reproduction process performed by a game apparatus 3 according to a second embodiment as shown in FIG. 1.

DESCRIPTION OF THE PREFERRED EMBODIMENTS

(First Embodiment)

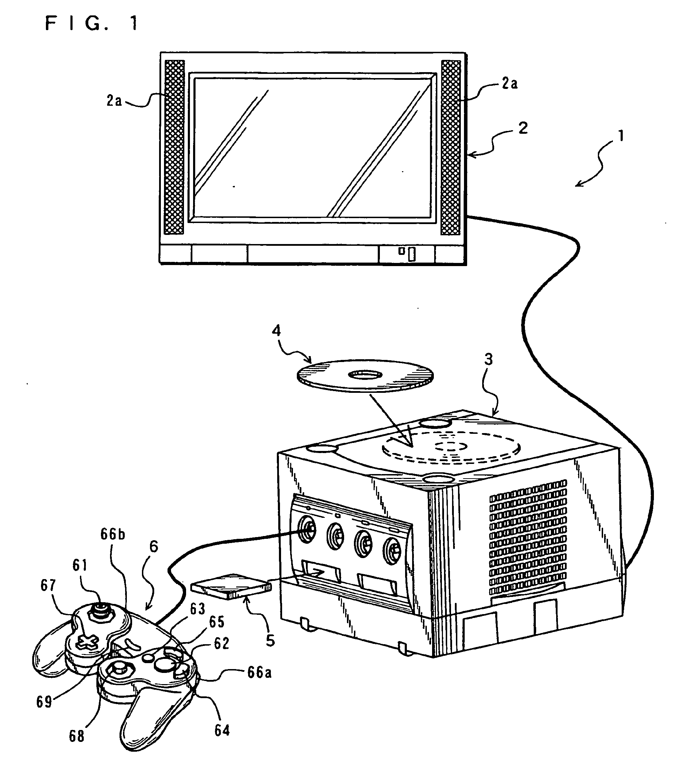

Hereinbelow, a first embodiment of the present invention will be described by taking a nonportable game apparatus as an example. Referring to FIG. 1 , a game system 1 according to the first embodiment of the present invention is described. FIG. 1 is an external view for explaining the game system 1.

In FIG. 1, the game system 1 includes a nonportable game apparatus 3 (hereinafter, simply referred to as a "game apparatus 3") connected via a connection cord to a cathode ray tube (CRT) display 2 (hereinafter, referred to as a "monitor 2"), such as a household television receiver, which includes loudspeakers 2a. The game apparatus 3 includes a controller 6 connected thereto via a connection cord and an optical disc 4 which is an example of a data storage medium which is removable from the game apparatus 3. Further, an external memory card 5, which has a backup memory or the like incorporated therein for storing save data, etc., in a non-volatile manner, is detachably loaded into the game apparatus 3 as necessary. The game apparatus 3 implements a game program stored in the optical disc 4 to display a game image on the monitor 2. Further, the game apparatus 3 uses the save data stored in the external memory card 5 to restore a previous game state and display a game image on the monitor 2. The player of the game apparatus 3 can enjoy the progress of the game by operating the controller 6 while viewing the game image displayed on the monitor 2. In the present embodiment, an exemplary case where a racing game program stored in the optical disc 4 is implemented is described.

As described above, the controller 6 is connected to the game apparatus 3 via a connection cord detachable from the game apparatus 3. Specifically, the controller 6 is an operating means for mainly operating a player object which appears in a game space displayed on the monitor 2 (and which is typically a car object which is an operation target of the player). The controller 6 includes a plurality of input portions, such as operating buttons, keys, and sticks. More specifically, the controller 6 includes: grip portions held by the player; a main stick 61 and a cross key 67 which are operable by, for example, the player's left thumb; a *C* stick 68, an *A* button 62, a *B* button 63, an *X* button 64, a *Y* button 65, and a start-pause button 69 which are operable by, for example, the player's right thumb. The controller 6 further includes an *R* button 66a and an *L* button 66b which are operable by, for example, the player's right and left index fingers, respectively.

For example, in the case of operating the controller 6 to play a racing game as described later, the *A* button 62 is used to determine an accelerator operation of the car object in the game space. For example, the player depresses the A button 62 to provide an instruction to accelerate the speed of the car object (to full-throttle), and the player releases the depressed A button 62 to cease providing an instruction to accelerate thereby ceasing to accelerate the speed of the car object (i.e., an instruction to completely close the accelerator). Although other input portions may be used during the progress of the game as described later, they are not directly relevant to descriptions of the present invention, and therefore detailed descriptions thereof are omitted herein.

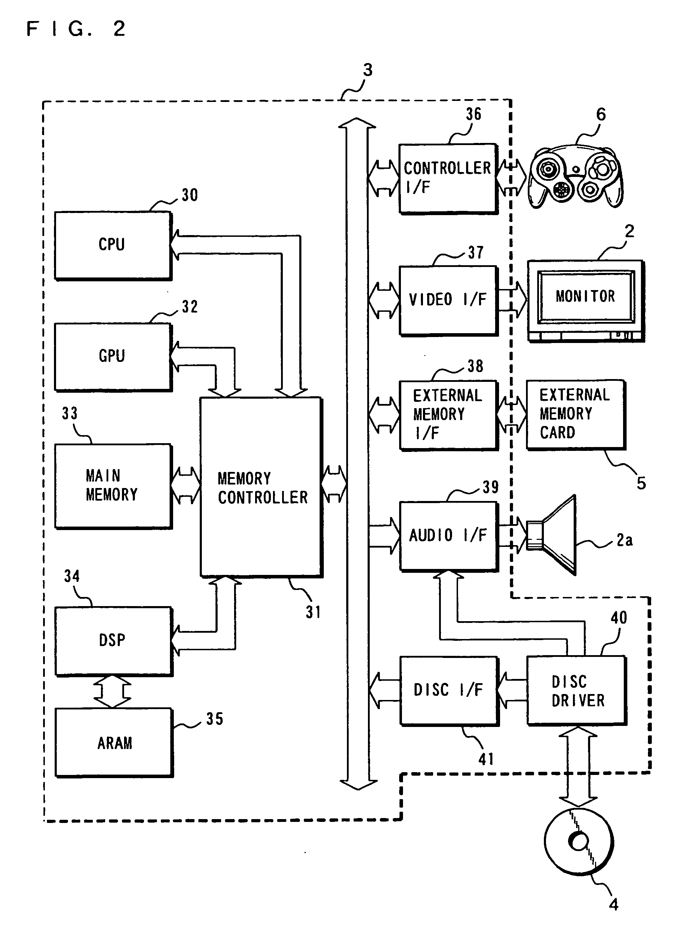

Next, referring to FIG. 2, a configuration of the game apparatus 3 will be described. FIG. 2 is a functional block diagram of the game apparatus 3.

In FIG. 2, the game apparatus 3 includes, for example, a reduced instruction set computer (RISC) central processing unit (CPU) 30 for implementing various types of programs. For example, the CPU 30 implements a startup program stored in a boot ROM (not shown) to initialize a memory, such as a main memory 33, and thereafter the CPU 30 implements a game program stored in the optical disc 4 and performs game processing in accordance with the game program. The CPU 30 is connected via a memory controller 31 to a graphics processing unit (GPU) 32, the main memory 33, a digital signal processor (DSP) 34, and an audio RAM (ARAM) 35. Further, the memory controller 31 is connected via a prescribed bus to a controller interface (I/F) 36, a video I/F 37, an external memory I/F 38, an audio I/F 39, and a disc I/F 41, which are respectively connected to the controller 6, the monitor 2, the external memory card 5, the loudspeakers 2a, and a disc drive 40.

The GPU 32 is operable to perform image processing in accordance with an instruction of the CPU 30, and is formed by a semiconductor chip for performing arithmetic processing required for displaying 3D graphics, for example. The GPU 32 performs image processing using a memory specialized for image processing (not shown) or a portion of storage area of the main memory 33 . The GPU 32 uses these elements to generate game image data to be displayed on the monitor 2, and properly outputs the generated game image data to the monitor 2 via the memory controller 31 and the video I/F 37.

The main memory 33 is a storage area used by the CPU 30 and properly stores a game program, etc. , required for processing by the CPU 30. For example, the main memory 33 stores a game program and a variety of types of data read by the CPU 30 from the optical disc 4. The game program and the variety of types of data stored in the main memory 33 are implemented by the CPU 30.

The DSP 34 is operable to process sound data, etc., generated by the CPU 30 during the implementation of the game program, and is connected to the ARAM 35 for storing the sound data, etc. The ARAM 35 is used when the DSP 34 performs prescribed processing (e.g., storage of pre-read data related to the game program and sound). The DSP 34 reads sound data stored in the ARAM 35, and outputs the read sound data through the memory controller 31 and the audio I/F 39 to the loudspeakers 2a included in the monitor 2.

The memory controller 31 is operable to generally control data transmission, and is connected to each of the above-described I/Fs. The controller I/F 36 consists of, for example, four controllers I/Fs 36a through 36d each having a connecter through which an external apparatus, which can be engaged with the connector, is connected so as to be able to communicate with the game apparatus 3. For example, the controller 6 is engaged with one of the above connectors via a connection cord, so as to be connected to the game apparatus 3 via the controller I/F 36. The video I/F 37 is connected to the monitor 2. The external memory I /F 38 is connected to the external memory card 5, so as to be able to access a backup memory included in the external memory card 5. The audio I/F 39 is connected to the loudspeakers 2a included in the monitor 2, such that sound data read by the DSP 34 from ARAM 35 and sound data directly outputted from the disc drive 40 can be outputted from the loudspeakers 2a. The disc I/F 41 is connected to the disc drive 40. The disc drive 40 reads data stored in the optical disc 4 placed in a prescribed read position, and outputs the read data over a bus of the game apparatus 3 and the audio I/F 39.

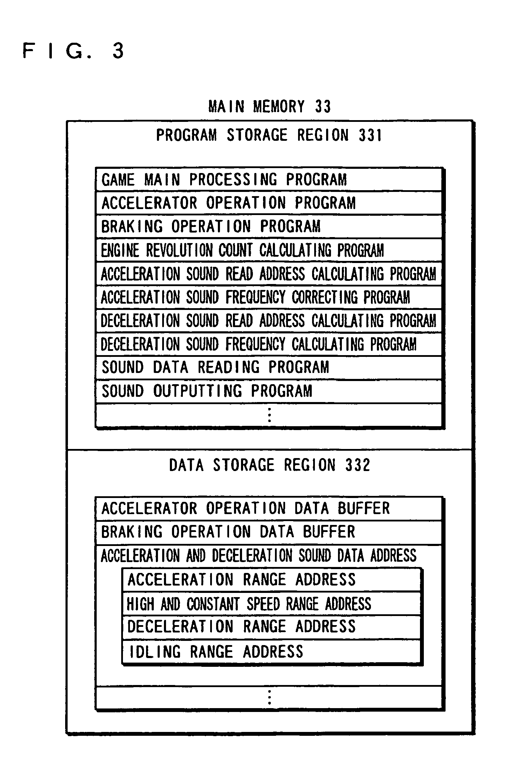

As described above, the main memory 33 stores a game program, etc., required for processing by the CPU 31, where appropriate, and also stores a game program, various types of data, etc., read by the CPU 30 from the optical disc 4. Hereinbelow, referring to FIG. 3, exemplary programs and data to be stored in the main memory 33 when implementing the racing game of the present invention are described. FIG. 3 is a schematic memory map for explaining exemplary programs and data to be stored in the main memory 33.

In FIG. 3, the main memory 33 includes a program storage region 331 and a data storage region 332. Specifically, stored in the program storage region 331 are a game main processing program implemented by the CPU 30, accelerator and braking operation programs used by the game main processing program, an engine revolution count calculating program, an acceleration sound read address calculating program, a deceleration sound read address calculating program, an acceleration sound frequency correcting program, a deceleration sound frequency correcting program, a sound data reading program, a sound outputting program, etc. Further, stored in the data storage region 332 are accelerator and braking operation data buffers used by the game main processing program and so on, an acceleration and deceleration sound data address, etc. The acceleration and deceleration sound data address includes an acceleration range address, a deceleration range address, a high and constant speed range address, and an idling range address.

The accelerator operation program defines traveling actions of the car object each corresponding to the player's operation of opening the accelerator (e.g., depressing of the *A* button 62). The game program of the present invention is programmed such that, for example, when the car object is at a speed of 0, if the *A* button 62 is kept depressed for a time period from time 0 to time $t_1$, the car object reaches a maximum speed $v_{max}$.

The braking operation program defines traveling actions of the car object each corresponding to the player's operation of closing the accelerator (e.g. , releasing the A button 62). The game program of the present invention is programmed such that, for example, when the car object is at the maximum speed $v_{max}$, if the *A* button 62 is left released for the time period from time 0 to time $t_1$, the car object decelerates to a speed of 0. This is an exemplary definition for the car object decelerating by means of engine braking, and an additional braking operation by the player (e.g. , depressing of the *B* button 63 or the *L* button 66b) may cause deceleration from the maximum speed $V_{max}$ to the speed of 0 in a period of time shorter than the time period from time 0 to time $t_1$. However, in the first embodiment, it is assumed for simplicity of explanation that the player does not perform any braking operation (i.e., the car object decelerates only by means of engine braking). Processing related to braking operations will be described later in a second embodiment of the present invention.

The engine revolution count calculating program defines calculation related to the number of revolutions of the car object's engine. Typically, the number of revolutions of the engine is calculated in accordance with the speed of the car object calculated by the accelerator or braking operation program. However, the final number of revolutions of the engine is calculated in consideration of effects of road conditions (e.g., uphill, downhill, friction with tires, etc.) in the game space, as well as the calculated speed of the car object. For example, when a tire or tires of the car object is/are turning in the air, or when the number of turns of tires is zero due to a braking operation or the like, the number of revolutions of the engine is calculated so as to be higher than that for the speed of the car object.

The acceleration sound and deceleration sound read address calculating programs each define calculation related to an acceleration and deceleration sound data address for reading acceleration or deceleration sound data Du or Dd stored in the ARAM 35, which will be described later, in accordance with the speed of the car object calculated in a manner as described above. The acceleration sound and deceleration sound frequency correcting programs each define correction of the sound of the engine to be reproduced which is in accordance with the number of revolutions of the engine for the current speed of the car object. Detailed operations of these programs will be described later.

The sound data reading program defines processing for reading sound data from the ARAM 35. The sound data contains engine sound data used for loop-reproduction, which will be described later, and the acceleration and deceleration sound data Du and Dd corresponding to the acceleration and deceleration sound data address calculated by the acceleration sound and deceleration sound read address calculating programs. The sound outputting program defines processing for outputting the sound data read by the sound data reading program from the loudspeakers 2a via the memory controller 31 and the audio I/F 39.

The accelerator and braking operation data buffers each temporarily store the details of the player's accelerator operation as described above, and states of the speed of the car object and the number of revolutions of the engine which are influenced by the accelerator operation. The acceleration and deceleration sound data address includes addresses of the acceleration sound and deceleration sound data stored in the ARAM 35 which are stored for each type of sound. Specifically, the acceleration sound data includes engine sound data corresponding to an acceleration range and a high and constant speed range, and addresses of the engine sound data for both of the ranges in the ARAM 35 are stored as acceleration range addresses and high and constant speed range addresses. The deceleration sound data includes engine sound data corresponding to a deceleration range and an idling range, and addresses of the engine sound data for both of the ranges in the ARAM 35 are stored as deceleration range addresses and idling range addresses.

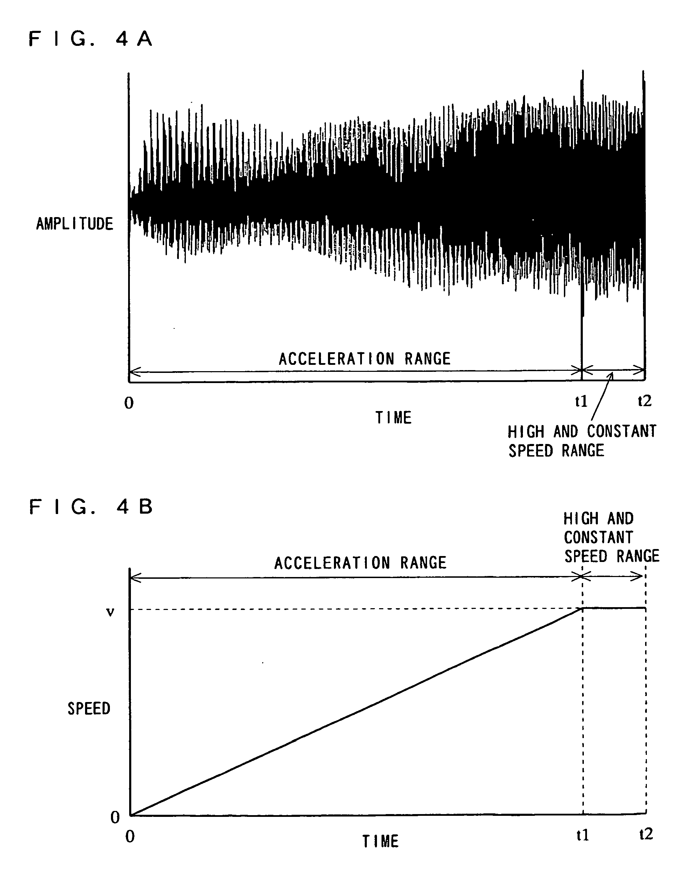

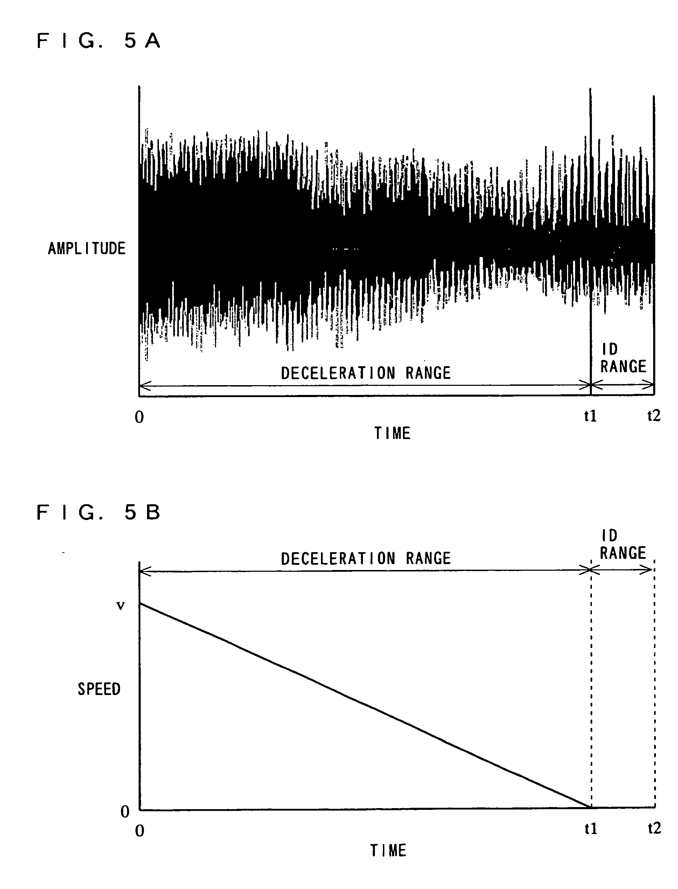

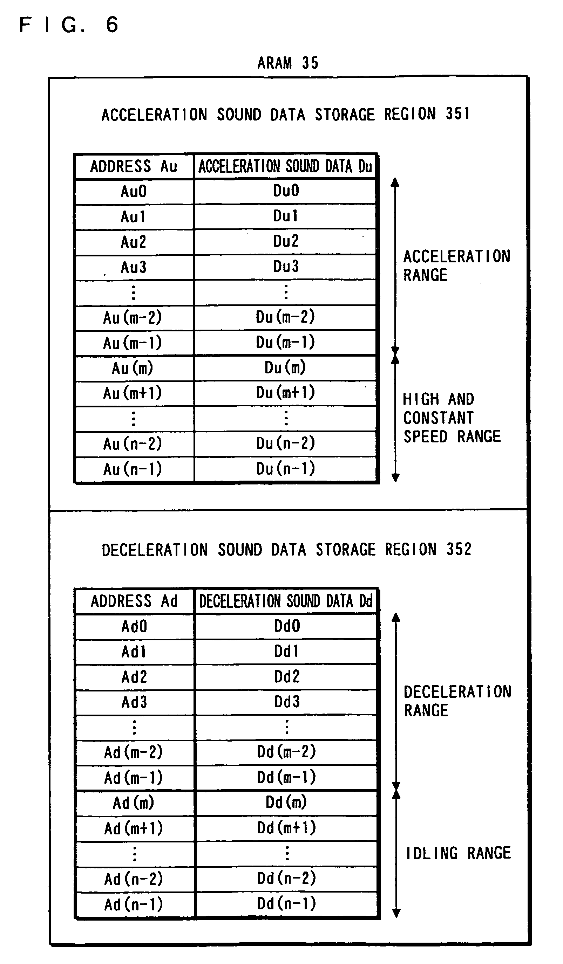

Next, referring to FIGs. 4A through 6, the acceleration sound data and the deceleration sound data which are stored in the ARAM 35 will be described. FIG. 4A is a graph showing an example of the acceleration sound data to be previously obtained. FIG. 4B is a graph for explaining exemplary conditions for previously obtaining the acceleration sound data shown in FIG. 4A. FIG. 5A is a graph showing an example of the deceleration sound data to be previously obtained. FIG. 5B is a graph for explaining the exemplary conditions for previously obtaining the deceleration sound data shown in FIG. 5A. FIG. 6 is a schematic memory map of the ARAM 35 having stored therein the acceleration sound and the deceleration sound data which are shown in FIGS. 4A and 5A, respectively.

The acceleration sound data shown in FIG. 4A is obtained by recording the noise of a real car which accelerates from a speed of 0 to speed v and thereafter travels at the constant speed v. Specifically, in the actual recording of the speed of the car, the car accelerates from a speed of 0 to the speed v at a constant acceleration rate in a period between times 0 and $t_1$, and maintains the constant speed v in a period between times $t_1$ and $t_2$ (see FIG. 4B). In this case, time $t_1$ corresponds to a point in time (e.g. $t_1$=8 sec.) at which the car object in the game space reaches a maximum speed $v_{max}$ after the *A* button 62 is kept depressed from a point in time at which the car object is at a speed of 0. The acceleration sound data recorded under such running conditions includes sound data of the car accelerating at a constant acceleration rate in the period between times 0 and $t_1$ (hereinafter, referred to as an "acceleration range"), and sound data of the car traveling at a constant high speed in the period between times $t_1$ and $t_2$ (hereinafter, referred to as a "high and constant speed range") (see FIG. 4A). Such acceleration sound data is previously recorded at a sampling frequency of i Hz (e.g., 16 kHz) for a time period from time 0 to time $t_2$ (e.g., 10 sec.).

The deceleration sound data shown in FIG. 5A is obtained by recording the noise of a real car which decelerates from speed v to a speed of 0 and thereafter stops and runs in an idling (ID) state. Specifically, in the actual recording of the speed of the car, the car decelerates from the speed v to a speed of 0 at a constant deceleration rate in a period between times 0 and $t_1$, and maintains an idling and resting state in a period between times $t_1$ and $t_2$ (see FIG. 5B) . In

this case, time $t_1$ corresponds to a point in time (e.g. $t_1$=8 sec.) at which the car object in the game space reaches a speed of 0 after the A button 62 is left released from a point in time at which the car object is at a maximum speed $v_{max}$. The deceleration sound data recorded under such running conditions includes sound data of the car decelerating at a constant deceleration rate in the period between times 0 and $t_1$ (hereinafter, referred to as an "deceleration range"), and sound data of the car resting in an idling state in the period between times $t_1$ and $t_2$ (hereinafter, referred to as an "idling range") (see FIG. 5A). Such deceleration sound data is previously recorded at a sampling frequency of i Hz (e.g., 16 kHz) for a time period from time 0 to time $t_2$ (e.g., 10 sec.).

In FIG. 6, the ARAM 35 includes an acceleration sound data storage region 351 and a deceleration sound data storage region 352. The acceleration sound data recorded under the above-described conditions is stored in the acceleration sound data storage region 351. The acceleration sound data stored in the acceleration data storage region 351 is equally divided into n pieces of j-bit (e.g., 8-bit) acceleration sound data Du0 through Du(n-1). The acceleration sound data Du0 through Du(n-1) are stored as sound data at addresses Au0 through Au(n-1), respectively, in the acceleration sound data storage region 351. Accordingly, sound close to the previously recorded acceleration sound data is reproduced by sequentially reading, at a rate of (i/j) Hz, the acceleration sound data Du0 through Du(n-1) stored in the acceleration sound data storage region 351 and by reproducing the read acceleration sound data at a reproduction rate of i Hz. Among the previously recorded acceleration sound data, sound data corresponding to the acceleration range is stored as m pieces of acceleration sound data Du0 through Du(m-1) at addresses Au0 through Au(m-1), respectively. Further, among the previously recorded acceleration sound data, sound data corresponding to the high and constant speed range is stored as (n-m) pieces of acceleration sound data Du(m) through Du(n-1) at addresses Au(m) through Au(n-1), respectively.

The deceleration sound data recorded under the above-described conditions is stored in the deceleration sound data storage region 352. The deceleration sound data stored in the deceleration data storage region 352 is equally divided into n pieces of j -bit (e.g., 8-bit) deceleration sound data Dd0 through Dd(n-1). The deceleration sound data Dd0 through Dd(n-1) are stored as sound data at addresses Ad0 through Ad(n-1), respectively, in the deceleration sound data storage region 352. Accordingly, sound close to the previously recorded deceleration sound data is reproduced by sequentially reading, at a rate of (i/j) Hz, the deceleration sound data Dd0 through Dd(n-1) stored in the deceleration sound data storage region 352 and by reproducing the read deceleration sound data at a reproduction rate of i Hz. Among the previously recorded deceleration sound data, sound data corresponding to the deceleration range is stored as m pieces of deceleration sound data Dd0 through Dd(m-1) at addresses Ad0 through Ad(m-1), respectively. Further, among the previously recorded deceleration sound data, sound data corresponding to the idling range is stored as (n-m) pieces of deceleration sound data Dd(m) through Dd(n-1) at addresses Ad(m) through Ad(n-1), respectively.

Next, an operation of the game apparatus 3 based on a game program of the present invention is described by taking as an example a racing game in which a car object is controlled by the player's operation so as to travel on a course set in the game space. When the game apparatus 3 is turned on, the CPU 30 of the game apparatus 3 implements a startup program stored in a boot ROM (not shown) to initialize units in the game apparatus 3, e. g. , the main memory 33. Then, a game program stored in the optical disc 4 is read onto the main memory 33 via the disc drive 40 and the disc I/F 41. Implementation of the game program is started and a game space is represented on the monitor 2 via the GPU 32. The acceleration sound and deceleration sound data stored in the optical disc 4 are stored into the ARAM 35 via the disc drive 40 and the disc I/F 41 in accordance with the addresses as described above.

Initially, the player of the game apparatus 3 views a game image displayed on the monitor 2 to select a desired course of the racing game and a type of the car object to operate. The selection is made by the player operating input portions of the controller 6 in a manner as described above. Then, a game image corresponding to the course and car object selected by the player is displayed on the monitor 2.

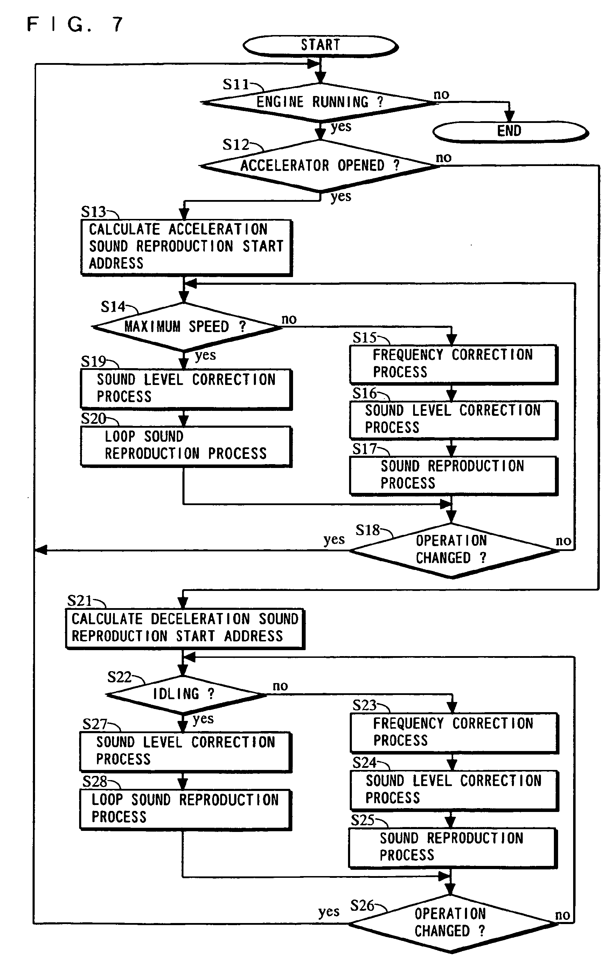

Referring to FIG. 7, described next is an engine sound reproduction process performed by the game apparatus 3 after the above process is performed. FIG. 7 is a flowchart illustrating the procedure of an engine sound reproduction process performed by the game apparatus 3.

In FIG. 7, the CPU 30 of the game apparatus 3 determines whether an engine of the car object in the game space is running (step S11), and also determines whether the accelerator is opened by the player operating the controller 6 (e.g., depressing the A button 62) (step S12). Then, if the CPU 30 determines that the engine of the car object is running and the accelerator is opened, the procedure proceeds to the next step S13, and if it is determined that the engine of the car object is running but the accelerator is closed, the procedure proceeds to the next step S21.

At step S13, in order to reproduce the sound of the engine of the car object which is accelerating, the CPU 30 calculates address Au of the acceleration sound data Du stored in the acceleration sound data storage region 351 of the ARAM 35, and the procedure proceeds to the next step. Specifically, in the calculation of step S13, the CPU 30 makes, based on the following expression (1), a calculation as to which one of m pieces of addresses Au0 through Au(m-1), at which the acceleration sound data Du corresponding to the acceleration range is stored, is the address from which the acceleration sound data Du is reproduced (an a' th address when counted from the address Au0).

$$a = m \times v_x / v_{max} \quad \ldots \quad (1)$$

Here, $v_x$ is the current speed of the car object calculated based on numerical values stored in the accelerator and braking operation buffers of the data storage region 332. In this case, the numerical values are obtained based on a period of time for which the A button 62 is kept depressed and a period of time for which the A button 62 is left released which are cumulatively calculated from a point in time at which the car object is at a speed of 0. As described above, $v_{max}$ is a maximum speed reached by the car object as a result of keeping the accelerator opened. The CPU 30 sets address Au (a-1), which is the a'th address when counted from address Au0 and is obtained based on the above expression (1), as an acceleration sound reproduction start address from which reproduction of the sound of an engine is started in a manner to be described later.

Here, the CPU 30 calculates the acceleration sound reproduction start address by using the above expression (1) which multiplies the number of addresses m of the acceleration sound data Du corresponding to the acceleration range stored in the acceleration sound data storage region 351 by a ratio of the current speed $V_x$ of the car object to the maximum speed $V_{max}$. As described above, the acceleration sound data Du stored in the acceleration sound data storage region 351 is obtained based on recorded sound data of the real car accelerating from a speed of 0 to speed v at a constant acceleration speed in a period between times 0 and $t_1$. The speed v of the real car is replaced by the maximum speed $v_{max}$ reached by the car object by keeping the accelerator opened from time 0 to time $t_1$ in the game. Such replacement ensures that the CPU 30 accurately calculates the address Au(a-1) at which acceleration sound of the real car, which corresponds to a ratio of the current speed $v_x$ of the car object to the maximum speed $V_{max}$, is stored.

Next, the CPU 30 determines whether the speed of the car object in the game space has reached the maximum speed $v_{max}$ (step S14). If the car object has not reached the maximum speed $v_{max}$, the CPU 30 determines that the car object is accelerating, and the procedure proceeds to the next step S15. On the other hand, if the car object has reached the maximum speed $v_{max}$, the CPU 30 determines that the car object is traveling at the maximum speed $v_{max}$ in a high and constant speed state, and the procedure proceeds to the next step S19.

At step S15, the CPU 30 calculates a frequency correction coefficient used for reproducing the acceleration sound data Du stored at and after the acceleration sound reproduction start address Au(a-1) calculated at the above step S13, and the procedure proceeds to the next step. In general, the speed of the car object and the number of revolutions of the engine are in a relationship proportional to each other unless there is a transmission shift. In some cases, however, the speed and the number of revolutions of the engine depart from the above proportional relationship during the progress of the game. At the above step S15, the frequency correction coefficient is calculated, for example, for a case such that the player revs the engine of the car object at a speed of 0 in an idling state, or for a case such that a tire or tires are turning in the air. As described above, the CPU 30 calculates, as necessary, the number of revolutions of the car object's engine by means of the engine revolution count calculating program during the progress of the game. The frequency correction coefficient is calculated for reflecting a value of the number of revolutions of the engine at a prescribed ratio on the frequency of the acceleration sound data Du. For example, the frequency correction coefficient is set so as to fall within a range from 0.92 to 1.08.

Next, the CPU 30 calculates a sound level correction coefficient for correcting the sound level at which the sound of the engine is reproduced (step S16). In the racing game, a virtual camera for capturing the car object as a game image is set, and in some cases, the location of the virtual camera can be changed with respect to the car object. For example, the virtual camera may be set in the interior of the car object, or may be set for providing a bird' s eye view of the car object. In accordance with a distance between such a virtual camera and the car object, the CPU 30 sets the sound level correction coefficient. For example, with reference to a reproduction sound level in a game image generated based on a viewpoint of the virtual camera set at a point at a prescribed distance from the car object, the CPU 30 calculates the sound level correction coefficient in accordance with an increase or decrease of a distance between the virtual camera and the point in the prescribed distance from the car object.

Next, the CPU 30 performs a process for reproducing acceleration sound data Du stored at and after the acceleration sound reproduction start address Au(a-1) calculated at the above step S13 (step S17), and repeats processing of steps S15-S17 until the player changes the accelerator operation (step S18) or until the car object reaches the maximum speed $v_{max}$ (step S14). If the CPU 30 determines that the player has changed the accelerator operation, the procedure returns to the above step S11 to continue the procedure. At the above step S17, the CPU 30 provides the DSP 34 with an instruction to sequentially read, as sound data, the acceleration sound data Du stored at and after the address Au(a-1) in the ARAM 35. Then, the DSP 34 multiplies the frequency of the sound data by the frequency correction coefficient obtained at the above step S15, adjusts a reproduction sound level using the sound level correction coefficient obtained at the step S16, and reproduces the sound of the engine from the loudspeakers 2a provided in the monitor 2 via the memory controller 31 and the audio I/F 39. In this sound reproduction process, unless the player's accelerator operation is changed (i.e., the accelerator is closed) or the car object reaches the maximum speed $v_{max}$, previously

recorded acceleration sound data is continuously reproduced using, as a reproduction start point, the acceleration sound reproduction start address calculated at the above step S13.

On the other hand, at the above step S14, if the car object has reached the maximum speed $v_{max}$, the CPU 30 determines that the car object is traveling at the maximum speed $v_{max}$ in a high and constant speed state, and the procedure proceeds to step S19. At step S19, the CPU 30 calculates a sound level correction coefficient for correcting the sound level at which the sound of the engine is reproduced, and the procedure proceeds to the next step. Processing at step S19 is similar to that at the above step S16, and therefore detailed descriptions thereof are omitted.

Next, the CPU 30 performs a process for loop-reproducing acceleration sound data Du(m) through Du(n-1) stored at addresses Au(m) through Au(n-1) corresponding to the high and constant speed range (step S20). The procedure returns to step S19 to repeatedly perform this loop reproduction process so long as the player keeps the accelerator opened(step S18) and the car object travels in a high and constant speed state at the maximum speed $v_{max}$ (step S14). The CPU 30 provides the DSP 34 with an instruction to repeatedly read, as sound data, the acceleration sound data Du (m) through Du(n-1) corresponding to the high and constant speed range. The DSP 34 adjusts a reproduction sound level using the sound level correction coefficient obtained at the above step S19, and outputs the sound of the engine from the loudspeakers 2a provided in the monitor 2 via the memory controller 31 and the audio I/F 39. If the CPU 30 determines that the player has changed the accelerator operation (i.e., the accelerator is closed) (step S18), the procedure returns to the above step S11 to continue the procedure.

On the other hand, at the above step S12, if it is determined that the engine of the car object is running but the accelerator is closed, the procedure proceeds to step S21. At step S21, in order to reproduce the sound of the engine of the car object which is decelerating, the CPU 30 calculates address Ad of the deceleration sound data Dd stored in the deceleration sound data storage region 352 of the ARAM 35, and the procedure proceeds to the next step. Specifically, in the calculation of step S21, the CPU 30 makes, based on the following expression (2), a calculation as to which one of m pieces of addresses Ad0 through Ad(m-1), at which the deceleration sound data Dd corresponding to the deceleration range is stored, is the address from which the deceleration sound data Dd is reproduced (a b'th address when counted from the address Ad0).

$$b = m - (m \times v_x / v_{max}) \quad \dots \quad (2)$$

Here, $v_x$ is the current speed of the car object which is similar to the numerical value used at the above step S13, and $v_{max}$ is a maximum speed. The CPU 30 sets address Ad(b-1), which is the b'th address when counted from address Ad0 and is obtained based on the above expression (2), as a deceleration sound reproduction start address from which reproduction of the sound of the engine is started in a manner to be described later.

Here, the CPU 30 calculates the deceleration sound reproduction start address by using the above expression (2) which subtracts, from the number of addresses m of the deceleration sound data Dd corresponding to the deceleration range stored in the deceleration sound data storage region 352 , a value obtained by multiplying the number of addresses m by a ratio of the current speed $v_x$ of the car object to the maximum speed $v_{max}$. As described above, the deceleration sound data Dd stored in the deceleration sound data storage region 352 is obtained based on recorded sound data of the real car decelerating from speed v to a speed of 0 at a constant deceleration speed in a period between times 0 and $t_1$. The deceleration from speed v to the speed of 0 of the real car is replaced by the deceleration from the maximum speed $v_{max}$ to the speed of 0 by keeping the accelerator closed from time 0 to time $t_1$ in the game. Such replacement ensures that the CPU 30 accurately calculates the address Ad(b-1) at which deceleration sound of the real car, which corresponds to a ratio of the current speed $v_x$ of the car object to the maximum speed $v_{max}$, is stored.

Next, the CPU 30 determines whether the speed of the car object in the game space corresponds to a speed of 0 in an idling state (step S22). If the car object is not in an idling state at a speed of 0, the CPU 30 determines that the car object is decelerating, and the procedure proceeds to the next step S23. On the other hand, if the CPU 30 determines that the car object is in an idling state at a speed of 0, the procedure proceeds to the next step S27.

At step S23, the CPU 30 calculates a frequency correction coefficient used for reproducing deceleration sound data Dd stored at and after the deceleration sound reproduction start address Ad(b-1) calculated at the above step S21, and also calculates a sound level correction coefficient for correcting a sound level at which the sound of the engine is reproduced (step S24). Processes performed at steps S23 and S24 are respectively similar to those performed at the above steps S15 and S16, and therefore detailed descriptions thereof are omitted. The procedure further proceeds to the next step.

Next, the CPU 30 performs a process for reproducing the deceleration sound data Dd stored at and after the deceleration sound reproduction start address Ad(b-1) calculated at the above step S21 (step S25), and repeats processing of steps S23-S25 until the player changes the accelerator operation (step S26) or until the car object arrives in an idling state at a speed of 0 (step S22). If the CPU 30 determines that the player has changed the accelerator operation (i.e., the accelerator is opened), the procedure returns to the above step S11 to continue the procedure. At the above step S25, the CPU 30 provides the DSP 34 with an instruction to sequentially read, as sound data, the deceleration sound data Dd stored at and after the address Ad(b-1) in the ARAM 35. Then, the DSP 34 multiplies the frequency of the sound data by the frequency correction coefficient obtained at the above step S23, adjusts a reproduction sound level using the sound level correction coefficient obtained at the step S24, and reproduces the sound of the engine from the loudspeakers 2a provided in the monitor 2 via the memory controller 31 and the audio I/F 39. In this sound reproduction process, unless the player's accelerator operation is changed (i.e., the accelerator is opened) or the car object arrives in an idling state at a speed of 0, previously recorded deceleration sound data is continuously reproduced using, as a reproduction start point, the deceleration sound reproduction start address calculated at the above step S21.

On the other hand, at the above step S22, if the CPU 30 determines that the car object is in an idling state at a speed of 0, the procedure proceeds to step S27. At step S27, the CPU 30 calculates a sound level correction coefficient for correcting the sound level at which the sound of the engine is reproduced, and the procedure proceeds to the next step. A process at step S27 is similar to that at the above step S16, and therefore detailed descriptions thereof are omitted.

Next, the CPU 30 performs a process for loop-reproducing deceleration sound data Dd(m) through Dd(n-1) stored at addresses Ad(m) through Ad(n-1) corresponding to the idling range (step S28). The procedure returns to step S27 to repeatedly perform this loop reproduction process so long as the player keeps the accelerator closed (step S26) and the car object maintains the idling state at a speed of 0 (step S22). The CPU 30 provides the DSP 34 with an instruction to repeatedly read, as sound data, the deceleration sound data Dd (m) through Dd(n-1) corresponding to the idling range stored at addresses Ad(m) through Ad(n-1) in the ARAM 35. The DSP 34 adjusts a reproduction sound level using the sound level correction coefficient obtained at the above step S27 , and outputs the sound of the engine from the loudspeakers 2a provided in the monitor 2 via the memory controller 31 and the audio I/F 39. If the CPU 30 determines that the player has changed the accelerator operation (i.e., the accelerator is opened), the procedure returns to the above step S11 to continue the procedure.

If the CPU 30 determines at the above step S11 that the engine is not running, the engine sound reproduction process according to the flowchart of FIG. 7 is terminated.

Note that although the ARAM 35 has stored therein the acceleration sound data Du and the deceleration sound data Dd, each equally divided into n pieces of data, and each of a portion of the acceleration sound data Du corresponding to the acceleration range and a portion of the deceleration data Dd corresponding to the deceleration range is equally divided into m pieces of data, the number of pieces of data to be divided into may not be equally n or m. By performing the above-described processing based on the flowchart of FIG. 7 and making an address calculation using the above expressions (1) and (2), similar processing can be realized even if the number of pieces of data to be divided into is not equal between the acceleration sound data Du and the deceleration sound data Dd.

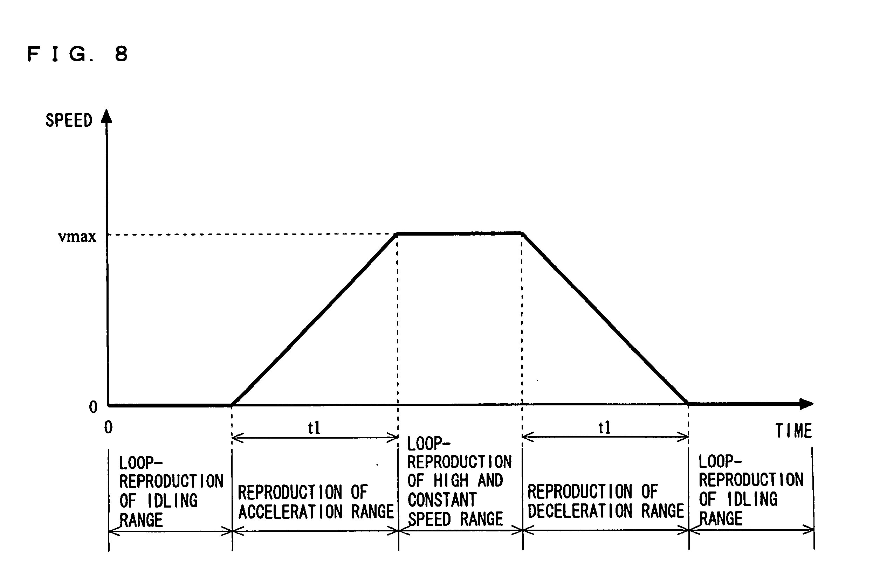

Referring to FIG. 8, described next is an example of the acceleration and deceleration sound data to be used by the game apparatus 3 in accordance with the procedure of the flowchart of FIG. 7. FIG. 8 is a graph for explaining the acceleration and deceleration sound data to be used when the car object in an idling state accelerates to the maximum speed $v_{max}$ and thereafter decelerates back into the idling state.

In FIG. 8, if the car object is in an idling state at a speed of 0, the game apparatus 3 implements loop-reproduction of the deceleration sound using the deceleration sound data Ad (m) through Ad(n-1) corresponding to the idling range stored in the deceleration sound data storage region 352 of the ARAM 35. Then, if the player performs an operation of opening the accelerator, acceleration sound data Du0, Du1, ..., corresponding to the acceleration range stored in the acceleration sound data storage region 351 are sequentially reproduced from address Au0. Thereafter, if the player keeps the accelerator opened for a time period from time 0 to time $t_1$ or more, the car object reaches the maximum speed $v_{max}$ at a point in time when the time period from time 0 to time $t_1$ passes since the accelerator is opened. In the period up to time $t_1$, the game apparatus 3 sequentially reproduces the acceleration sound data Du0 through Du(m-1) corresponding to the acceleration range stored at addresses Au0 through Au(m-1) in the acceleration sound data storage region 351. Thereafter, if the player further continues the operation of opening the accelerator, the car object maintains the maximum speed $v_{max}$. In a period during which the maximum speed $v_{max}$ is maintained, the game apparatus 3 performs loop-reproduction of acceleration sound using the acceleration sound data Du (m) through Du(n-1) corresponding to the high and constant speed range stored at addresses Au(m) through Au(n-1) in the acceleration sound data storage region 351.

Then, if the player performs an operation of closing the accelerator, deceleration sound data Dd0, Dd1, ..., corresponding to the deceleration range stored in the deceleration sound data storage region 352 are sequentially reproduced from address $Ad_0$. Thereafter, if the player keeps the accelerator closed for a time period from time 0 to time $t_1$ or more, the car object arrives in an idling state at a speed of 0 after the time period from time 0 to time $t_1$ has passed since the accelerator was closed. In the period up to time $t_1$, the game apparatus 3 sequentially reproduces the deceleration sound data Dd0 through Dd(m-1) corresponding to the deceleration range stored at addresses Ad0 through Ad (m-1) in the deceleration sound data storage region 352. Thereafter, if the player further continues the operation of closing the accelerator closed, the car object maintains the idling state at a speed of 0. In a period during which the idling state is maintained, the game apparatus 3 performs, again, loop-reproduction of deceleration sound using the deceleration sound data Dd (m) through Dd(n-1) corresponding to the idling range stored at addresses Ad(m) through Ad(n-1) in the deceleration sound data storage region 352.

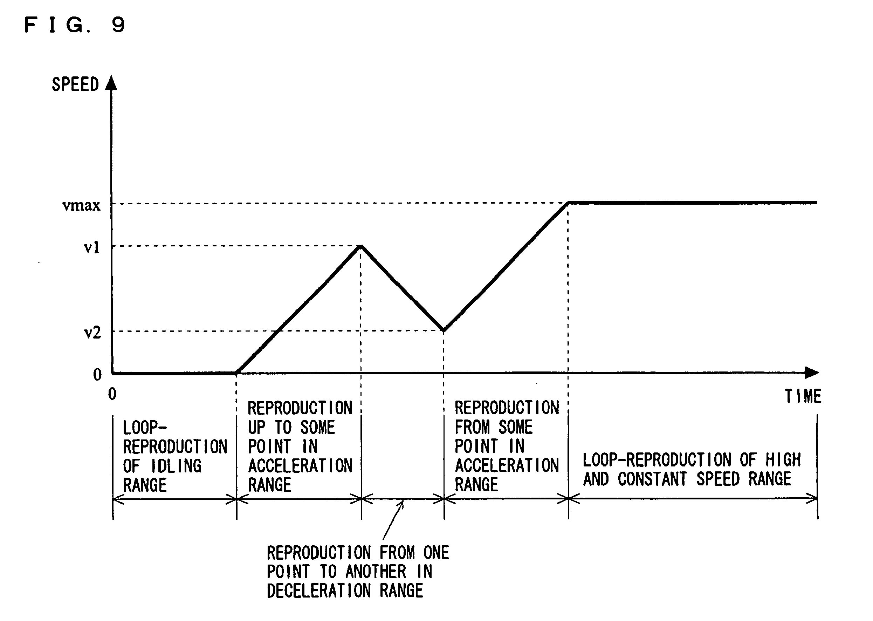

Referring to FIG. 9, described next is another example of the acceleration and deceleration sound data to be used by the game apparatus 3 in accordance with the procedure of the flowchart of FIG. 7. FIG. 9 is a graph for explaining the acceleration and deceleration sound data to be used when the car object in an idling state accelerates to speed $v_1$ lower than the maximum speed $v_{max}$. temporarily decelerates to speed $v_2$ ($v_2 < v_1$), and thereafter reaccelerates to the maximum speed $v_{max}$.

In FIG. 9, if the car object is in an idling state at a speed of 0, the game apparatus 3 implements loop-reproduction of deceleration sound using the deceleration sound data Ad (m) through Ad(n-1) corresponding to the idling range stored in the deceleration sound data storage region 352 of the ARAM 35. Then, if the player performs an operation of opening the accelerator, acceleration sound data Du0, Du1, ..., corresponding to the acceleration range stored in the acceleration sound data storage region 351 are sequentially reproduced from address Au0. Then, if the player stops the operation of opening the accelerator, the car object reaches speed $v_1$. In a period up until the car object reaches speed $v_1$, the game apparatus 3 sequentially reproduces the acceleration sound data Du up to an address corresponding to the above speed $v_1$ using the acceleration sound data Du0 through Du(m-1) corresponding to the acceleration range stored in the acceleration sound data storage region 351.

Then, if the player keeps the accelerator closed, the car object decelerates from speed $v_1$ to speed $v_2$ until an operation of opening the accelerator is performed again. In this time period, the game apparatus 3 sequentially reproduces the deceleration sound data Dd from an address corresponding to the above speed $v_1$ to an address corresponding to the above speed $v_2$ using the deceleration sound data Dd0 through Dd(m-1) corresponding to the deceleration range stored at the addresses Ad0 through Ad(m-1) in the deceleration sound data storage region 352.

Then, if the player performs, again, the operation of opening the accelerator, the car object accelerates from speed $v_2$, eventually reaching the maximum speed $v_{max}$. In this time period, the game apparatus 3 sequentially reproduces the acceleration sound data Du from the address corresponding to the above speed $v_2$ to an address corresponding to the maximum speed $v_{max}$ using the acceleration sound data Du0 through Du(m-1) corresponding to the acceleration range stored at addresses Au0 through Au(m-1) in the acceleration sound data storage region 351. Thereafter, if the player further continues the operation for opening the accelerator, the car object maintains the maximum speed $v_{max}$. In a time period during which the maximum speed $v_{max}$ is maintained, the game apparatus 3 implements loop-reproduction of acceleration sound using the acceleration sound data Du (m) through Du(n-1) corresponding to the high and constant speed range stored at addresses Au(m) through Au(n-1) in the acceleration sound data storage region 351.

As described above, in the game system 1 according to the first embodiment of the present invention, sounds of the engine corresponding to traveling actions, such as acceleration, deceleration, idling, and maximum and constant speed states, of the car object in the game space are reproduced using previously recorded sound data obtained by running a real car, and therefore it is possible to reproduce the sound of the engine close to the sound of the real car's engine. When inputs for accelerating the speed of the car object are provided during the game, corresponding acceleration sound data can be sequentially read and reproduced, and when inputs for decelerating the speed of the car object during acceleration are starting to be provided, a deceleration sound data read position, which corresponds to a position where reproduction of the acceleration sound data is stopped, can be designated. Therefore, it is possible to reproduce the natural sound of an engine using the acceleration sound data and the deceleration sound data as if they are originally continuous with each other. Further, when inputs for accelerating the speed of the car object during deceleration are starting to be provided, an acceleration sound data read position can be designated, such that the acceleration sound data can be reproduced from a position corresponding to a position where reproduction of the deceleration sound data is stopped, rather than from the beginning of the entire acceleration sound data. Therefore, it is possible to reproduce a more natural sound of an engine using the acceleration sound data and the deceleration sound data as if they are originally continuous with each other.

(Second Embodiment)

A game system according to a second embodiment of the present invention is described. The game system implementing a game program according to the second embodiment includes analog switches which respectively enable the player to arbitrarily control the degree of the accelerator's opening and the intensity of braking power. Specifically, in the second embodiment, each of the degrees of acceleration and deceleration is set arbitrarily, while in the game system according to the first embodiment, a 100% opening of the accelerator is designated by depressing the A button 62 to provide acceleration, and a 0% opening of the accelerator is designated by releasing the A button 62 to provide deceleration by means of engine braking. The game system implementing such a game program is described as the second embodiment.

The game system according to the second embodiment is configured similarly to the game system 1 described in the first embodiment with reference to FIG. 1. Hereinbelow, like elements described in the first embodiment are denoted by the same reference numerals, and detailed descriptions thereof are omitted. Note that in the case of playing such a racing game as described below in the game system according to the second embodiment, for example, an $R$ button 66a and an $L$ button 66b provided in the controller 6 are used as the above analog switches. For example, the player applies arbitrary pressure onto the $R$ button 66a (i.e., depresses the $R$ button 66a with arbitrary pressure) to designate to the game apparatus 3 the degree of opening of the car object's accelerator, which ranges between 0% and 100%, in accordance with the pressure. For example, if the player depresses the $R$ button 66a as far as possible, a 100% opening of the accelerator is designated, and by ceasing to depress (i.e., by releasing) the R button 66a, closing of the car object's accelerator (i.e., a 0% opening of the accelerator) is designated. Further, the player applies arbitrary pressure onto the $L$ button 66b (i.e., depresses the $L$ button 66b with arbitrary pressure) to designate to the game apparatus 3 the intensity of braking power of the car object, which ranges between 0% and 100%, in accordance with the pressure. For example, if the player depresses the $L$ button 66b as far as possible, a 100% braking power is designated, and by ceasing to depress (i.e., by releasing) the $L$ button 66b, releasing of the car object's braking (i.e., a 0% braking power) is designated.

The game apparatus 3 provided in the game system 1 according to the second embodiment is configured similarly to the game apparatus 3 described in the first embodiment with reference to FIG. 2. Hereinbelow, like elements described in the first embodiment are denoted by the same reference numerals, and detailed descriptions thereof are omitted.

Programs and data stored in the main memory 33 of the second embodiment and storage regions therefor are the same as those in the memory map described in the first embodiment with reference to FIG. 3.

An accelerator operation program of the second embodiment defines a traveling action of the car object in accordance with the degree of the accelerator's opening based on pressure applied by the player performing an operation of opening the accelerator (e.g. , depressing the $R$ button 66a) . In the game program of the present invention, for example, the car object is programmed so as to reach maximum speed $v_{max}$ when the car object is at a speed of 0 and the $R$ button 66a is kept operated with a 100% opening of the accelerator for a time period from time 0 to time $t_1$. Further, the car object is programmed so as to reach quasi-maximum speed $v_{qmax}$ set for each degree of the accelerator's opening in accordance with the duration of time set for the degree of the accelerator's opening when the car object is at a speed of 0 and the $R$ button 66a is kept operated with the degree of the accelerator's opening other than a 100% opening. Note that each of the maximum speed $v_{max}$ and the quasi-maximum speed $v_{qmax}$ is a possible maximum speed at which the car object is able to travel in accordance with the degree of the accelerator's opening, and they are collectively referred to as a "maximum speed $v_{amax}$ corresponding to the degree of the accelerator's opening".

A braking operation program defines a traveling action of the car object in accordance with the intensity of braking power based on pressure applied by the player performing an operation of closing the accelerator (e.g. , releasing the $R$ button 66a) and an operation of applying braking (e.g., depressing the $L$ button 66b). In the game program of the present invention, for example, the car object is programmed so as to decelerate to a speed of 0 when the car object is at the maximum speed $v_{max}$ and both the $R$ button 66a and the $L$ button 66b are left released (i.e., the car object is in a state where engine braking can be applied with a 0% opening of the accelerator and a 0% braking power) for a time period from time 0 to time $t_1$. It is also defined that if the player further performs a braking operation (e.g. , depresses the $L$ button 66b), the car object decelerates from the maximum speed $v_{max}$ to a speed of 0 in a deceleration time period shorter than the time period from time 0 to time $t_1$ having been set in accordance with the intensity of braking power. Note that when the braking operation is performed by, for example, depressing a $B$ button 63, the player is able to designate either a 0% or 100% braking power, and therefore the braking operation program defines the deceleration time period in accordance with a 0% or 100% braking power.

Other programs and data stored in the main memory 33 are similar to those described in the first embodiment, and therefore detailed descriptions thereof are omitted. Also, acceleration sound data and deceleration sound data stored in the ARAM 35 are similar to those described in the first embodiment with reference to FIGs. 4A through 6. Accordingly, like data described in the first embodiment are denoted by the same reference numerals, and detailed descriptions thereof are omitted.

Next, an operation of the game apparatus 3 based on the game program according to the second embodiment is described by taking as an example a racing game in which the car object is controlled by the player's operation so as to travel on a course set in the game space. When the game apparatus 3 is turned on, the CPU 30 of the game apparatus 3 implements a startup program stored in a boot ROM (not shown) to initialize units in the game apparatus 3, e.g., the main memory 33. Then, a game program stored in the optical disc 4 is read onto the main memory 33 via the disc drive 40 and the disc I/F 41. Implementation of the game program is started and a game space is represented on the monitor 2 via the GPU 32, thereby starting the game. The acceleration sound data and the deceleration sound data stored in the optical disc 4 are stored into the ARAM 35 via the disc drive 40 and the disc I/F 4 in accordance with addresses as described above.

Initially, the player of the game apparatus 3 views a game image displayed on the monitor 2 to select a desired course of the racing game and a type of the car object to operate. The selection is made by the player operating input portions of the controller 6 in a manner as described above. Then, a game image corresponding to the course and car object selected by the player is displayed on the monitor 2.

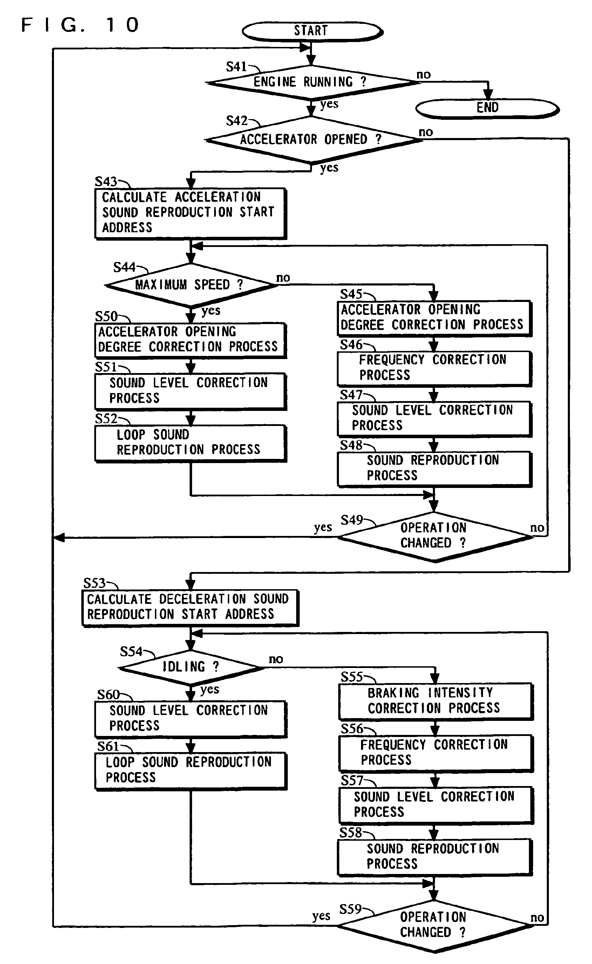

Referring to FIG. 10, described next is an engine sound reproduction process performed by the game apparatus 3 according to the second embodiment after the above process is performed. FIG. 10 is a flowchart illustrating the procedure of an engine sound reproduction process performed by the game apparatus 3.

In FIG. 10, the CPU 30 of the game apparatus 3 determines whether an engine of the car object in the game space is running (step S41), and also determines whether the accelerator is opened by the player operating the controller 6 (e.g., depressing the R button 66a) (step S42). Then, if the CPU 30 determines that the engine of the car object is running and the accelerator is opened, the procedure proceeds to the next step S43, and if the engine of the car object is running but the accelerator is closed, the procedure proceeds to the next step S53.

At step S43, in order to reproduce the sound of the engine of the car object which is accelerating, the CPU 30 calculates address Au of the acceleration sound data Du stored in the acceleration sound data storage region 351 of the ARAM 35, and the procedure proceeds to the next step. Specifically, in the calculation of step S43, the CPU 30 makes, based on the following expression (3), a calculation as to which one of m pieces of addresses Au0 through Au(m-1), at which the acceleration sound data Du corresponding to the acceleration range is stored, is the address from which the acceleration sound data Du is reproduced (an a'th address when counted from the address Au0).

$$a = m \times v_x / v_{amax} \quad \cdots \quad (3)$$

Here, $v_x$ is the current speed of the car object calculated based on numerical values stored in the accelerator and braking operation buffers of the data storage region 332. In this case, the numerical values are obtained based on a period of time for which the *R* button 66a is kept depressed, a period of time for which the *R* button 66a is left released, a period of time for which the *L* button 66b is kept depressed, and a period of time for which the *L* button 66b is left released, which are cumulatively calculated for each degree of pressure onto the button (i.e., for each degree of the accelerator's opening and each intensity of braking power) from a point in time at which the car object is at a speed of 0. As described above, $v_{amax}$ is a maximum speed which corresponds to the degree of the accelerator's opening and is reached by the car object as a result of keeping the accelerator opened. The CPU 30 sets address Au (a-1), which is the a' th address when counted from address Au0 and is obtained based on the above expression (3), as an acceleration sound reproduction start address to be calculated at step S43.

Here, the CPU 30 calculates the acceleration sound reproduction start address by using the above expression (3) which multiplies the number of addresses m of the acceleration sound data Du corresponding to the acceleration range stored in the acceleration sound data storage region 351 by a ratio of the current speed $V_x$ of the car object to the maximum speed $V_{amax}$ corresponding to the degree of the accelerator's opening. As described above, the acceleration sound data Du stored in the acceleration sound data storage region 351 is obtained based on recorded sound data of the real car accelerating from a speed of 0 to speed v at a constant acceleration speed. The speed v of the real car is replaced by the maximum speed $V_{amax}$ corresponding to the degree of the accelerator's opening which is reached by the car object by keeping the accelerator opened in the game. Such replacement ensures that the CPU 30 accurately calculates the address Au(a-1) at which acceleration sound of the real car, which corresponds to a ratio of the current speed $v_x$ of the car object to the maximum speed $v_{amax}$ corresponding to the degree of the accelerator's opening, is stored.

Next, the CPU 30 determines whether the speed of the car object in the game space has reached the maximum speed $v_{amax}$ corresponding to the degree of the accelerator's opening designated by the player's current operation (step S44). Specifically, if the degree of the accelerator's opening is 100%, the CPU 30 makes a determination based on the maximum speed $v_{max}$, and if otherwise, the CPU 30 makes a determination based on a quasi-maximum speed $v_{qmax}$ corresponding to the degree of the accelerator's opening. If the car object has not reached the maximum speed $v_{amax}$ corresponding to the degree of the accelerator's opening, the CPU 30 determines that the car object is accelerating, and the procedure proceeds to the next step S45. On the other hand, if the car object has reached the maximum speed $v_{amax}$ corresponding to the degree of the accelerator's opening, the CPU 30 determines that the car object is traveling at the maximum speed $v_{amax}$ in a high and constant speed state, and the procedure proceeds to the next step S50.

At step S45, the CPU 30 calculates an accelerator opening degree correction coefficient ak used for reproducing acceleration sound data Du stored at and after the acceleration sound reproduction start address Au(a-1) calculated at the above step S43, and the procedure proceeds to the next step. As described above, a maximum possible speed which can be reached by the car object and the number of revolutions of the engine at the maximum possible speed may differ depending on the degree of the accelerator's opening, and a required time period may also differ depending on the maximum possible speed to be reached. However, in the calculation using the above expression (3), the same acceleration sound reproduction start address is calculated for the same ratio of the current speed $v_x$ to the maximum speed $v_{amax}$ corresponding to the degree of the accelerator's opening. As a result, the same acceleration sound data is reproduced for different speeds $v_x$. Further, an engine sound reproduction time period required for reaching the maximum speed $v_{amax}$ corresponding to the degree of the accelerator's opening is also invariable. At the above step S45, the accelerator opening degree correction coefficient ak is calculated as a frequency magnification by which the frequency of the engine sound to be reproduced is multiplied, in order to accurately reflect, on the engine sound to be reproduced, differences between speeds of the car object, between the numbers of revolutions of the engine, and between time periods required for reaching the maximum speed, which are all caused by a difference between degrees of the accelerator's opening. The CPU 30 calculates the accelerator opening degree correction coefficient using the following expression (4),

$$ak=ao_p\times(ao_{100}-ao_0)/100+ao_0 \quad ... \quad (4),$$

where $ao_p$ is the current degree of the accelerator's opening (0%-100%), $ao_{100}$ is a constant indicating a frequency magnification at a 100% opening of the accelerator, and $ao_0$ is a constant indicating a frequency magnification at a 0% opening of the accelerator. For example, in an initial setting, constant $ao_{100}=1.0$, and constant $ao_0=0.3$.

Next, the CPU 30 calculates a frequency correction coefficient used for reproducing acceleration sound data Du stored at and after the acceleration sound reproduction start address Au(a-1) calculated at the above step S43 (step S46), and the CPU 30 also calculates a sound level correction coefficient used for correcting a sound level at which the engine sound is reproduced (step S47). Processes performed at these steps S46 and S47 are respectively similar to those performed at steps S15 and S16 described in the first embodiment, and therefore detailed descriptions thereof are omitted. The procedure further proceeds to the next step.

Next, the CPU 30 performs a process for reproducing acceleration sound data Du stored at and after the acceleration sound reproduction start address Au(a-1) calculated at the above step S43 (step S48), and repeats processing of steps S45-S48 until the player changes the accelerator operation (i.e., the accelerator is closed) (step S49) or until the car object reaches the maximum speed $v_{amax}$ corresponding to the degree of the accelerator's opening (step S44). If the CPU 30 determines that the player has closed the accelerator, the procedure returns to the above step S41 to continue the procedure. At the above step S48, the CPU 30 provides the DSP 34 with an instruction to sequentially read, as sound data, the acceleration sound data Du stored at and after the address Au(a-1) in the ARAM 35. Then, the DSP 34 multiplies the frequency of the sound data by the accelerator opening degree correction coefficient ak calculated at the above step S45 and the frequency correction coefficient calculated at the above step S46, adjusts a reproduction sound level using the sound level correction coefficient obtained at the above step S47, and outputs the engine sound from the loudspeakers 2a provided in the monitor 2 via the memory controller 31 and the audio I/F 39. In this sound reproduction process, unless the player's accelerator operation is changed (i.e., the accelerator is closed) or the car object reaches the maximum speed $V_{amax}$ corresponding to the degree of the accelerator's opening, previously recorded acceleration sound data is continuously reproduced using, as a reproduction start point, the acceleration sound reproduction start address calculated at the above step S43. Since the frequency of the acceleration sound data stored in the ARAM 35 is multiplied by the accelerator opening degree correction coefficient ak, in the case where the degree of the accelerator's opening is not 100%, a reproduction frequency of the acceleration sound to be reproduced becomes relatively low in accordance with the degree of the accelerator's opening, and a time period required for reaching the maximum speed $v_{amax}$ becomes relatively long in accordance with the degree of the accelerator's opening. Accordingly, it is possible to accurately reflect, on the engine sound to be reproduced, differences between speeds of the car object, between the numbers of revolutions of the engine, and between time periods required for reaching the maximum speed, which are all caused by a difference between degrees of the accelerator's opening.

On the other hand, at the above step S44, if the car object has reached the maximum speed $v_{amax}$ corresponding to the degree of the accelerator's opening, the CPU 30 determines that the car object is running at the maximum speed $v_{amax}$ in a high and constant speed state, and the procedure proceeds to step S50. At step S50, the CPU 30 calculates an accelerator opening degree correction coefficient ak used for reproducing acceleration sound data Du(m) through Du(n-1) stored at addresses Au(m) through Au (n-1) corresponding to the high and constant speed range, and the procedure proceeds to the next step. The process at step S50 is similar to that at the above step S45, and therefore detailed descriptions thereof are omitted.

Next, the CPU 30 calculates a sound level correction coefficient for correcting a sound level at which the engine sound is reproduced (step S51), and the procedure proceeds to the next step. The process at step S51 is similar to that at the above step S16 described in the first embodiment, and therefore detailed descriptions thereof are omitted.

Next, the CPU 30 performs a process for loop-reproducing acceleration sound data Du(m) through Du(n-1) stored at addresses Au (m) through Au(n-1) corresponding to the high and constant speed range (step S52). The procedure returns to the above step S50 to repeat this loop reproduction process so long as the accelerator is kept opened by the player (step S49). The CPU 30 provides the DSP 34 with an instruction to repeatedly read, as sound data, the acceleration sound data Du (m) through Du (n-1) corresponding to the high and constant speed range stored at addresses Au (m) through Au(n-1) in the ARAM 35. The DSP 34 multiplies the frequency of the sound data by the accelerator opening degree correction coefficient ak calculated at the above step S50, adjusts a reproduction sound level using the sound level correction coefficient obtained at the above step S51, and outputs the engine sound from the loudspeakers 2a provided in the monitor 2 via the memory controller 31 and the audio I/F 39. If the CPU 30 determines that the player has changed the accelerator operation (i.e., the accelerator has been closed) (step S49), the procedure returns to the above step S41 to continue the procedure.

On the other hand, at the above step S42, if the engine of the car object is running but the accelerator is closed, the procedure proceeds to step S53. At step S53, in order to reproduce the engine sound of the car object which is decelerating, the CPU 30 calculates address Ad of the deceleration sound data Dd stored in the deceleration sound data storage region 352 of the ARAM 35 in the same manner as in the above step S21 in the first embodiment, and the procedure proceeds to the next step. Specifically, in the calculation of step S53, the CPU 30 makes, basedon the expression (2) used at the above step S21 which is reproduced below for ease of reference, a calculation as to which one of m pieces of addresses Ad0 through Ad(m-1), at which the deceleration sound data Dd corresponding to the deceleration range is stored, is the address from which the deceleration sound data Dd is reproduced (a b'th address when counted from the address Ad0).

$$b=m-(m\times v_x/v_{max}) \ \ldots \ (2)$$

Here, $v_x$ is the current speed of the car object which is similar to the numerical value used at the above step S43, and $v_{max}$ is a maximum speed. The CPU 30 sets address Ad(b-1) calculated based on the above expression (2), which is a b'th address when counted from address Ad0, as a deceleration sound reproduction start address from which the engine sound is reproduced.

Next, the CPU 30 determines whether the car object in the game space is in an idling state at a speed of 0 (step S54). If the car object is not in an idling state at a speed of 0, the CPU 30 determines that the car object is decelerating, and the procedure proceeds to the next step S55. On the other hand, if the CPU 30 determines that the car object is in an idling state at a speed of 0, the procedure proceeds to the next step S60.

At step S55, the CPU 30 calculates a braking intensity correction coefficient bk used for reproducing deceleration sound data Dd stored at and after the deceleration sound reproduction start address Ad(b-1) calculated at the above step S53, and the procedure proceeds to the next step. As described above, if the player further performs a braking operation (e.g. , depresses the L button 66b), the car object decelerates from the maximum speed $v_{max}$ to a speed of 0 in a time period shorter than a time period from time 0 to time $t_1$ set in accordance with a designated intensity of braking power. Specifically, if the player performs a braking operation with an arbitrary intensity of braking power, the car object decelerates at a deceleration rate which is relatively higher than a deceleration rate of deceleration by means of engine braking (i.e., a 0% braking power). However, in the calculation using the above expression (2), the same deceleration sound reproduction start address is calculated for the same ratio of the current speed $v_x$ to the maximum speed $v_{max}$. As a result, the same deceleration sound data is reproduced for speeds with different deceleration time periods. At the above step S55, the braking intensity correction coefficient bk is calculated as a frequency magnification by which the frequency of the engine sound to be reproduced is multiplied, in order to accurately reflect, on the engine sound to be reproduced, differences between speeds of the car object and between the numbers of revolutions of the engine, which are all caused by a difference between intensities of braking power. The CPU 30 calculates the braking intensity correction coefficient bk using the following expression (5),

$$bk=(100-bo_p)\times(bo_0-bo_{100})/100+bo_{100},$$

where $bo_p$ is the current braking power (0%-100%), $bo_0$ is a constant indicating a frequency magnification at a 0% braking power, and $bo_{100}$ is a constant indicating a frequency magnification at a 100% braking power. For example, in an initial setting, constant $bo_0=1.0$, and constant $bo_{100}=0.3$.

Next, the CPU 30 calculates a frequency correction coefficient used for reproducing deceleration sound data Dd stored at and after the deceleration sound reproduction start address Ad(b-1) calculated at the above step S53 (step S56), and also calculates a sound level correction coefficient for correcting a sound level at which the engine sound is reproduced (step S57). Processes performed at steps S56 and S57 are respectively similar to those performed at the above steps S15 and S16, and therefore detailed descriptions thereof are omitted. The procedure further proceeds to the next step.

Next, the CPU 30 performs a process for reproducing the deceleration sound data Dd stored at and after the deceleration sound reproduction start address Ad(b-1) calculated at the above step S53 (step S58), and repeats processing of steps S55-S58 after the player stops a braking operation until the accelerator is opened (step S59) or until the car object arrives in an idling state at a speed of 0 (step S54). If the CPU 30 determines that the player has changed the accelerator operation (i.e. , the braking operation is stopped and the accelerator is opened), the procedure returns to the above step S41 to continue the procedure. At the above step S58, the CPU 30 provides the DSP 34 with an instruction to sequentially read, as sound data, the deceleration sound data Dd stored at and after the address Ad(b-1) in the ARAM 35. Then, the DSP 34 multiplies the frequency of the sound data by the braking intensity correction coefficient bk calculated at the above step S55 and the frequency correction coefficient obtained at the above step S56, adjusts a reproduction sound level using the sound level correction coefficient obtained at the step S57, and outputs the engine sound from the loudspeakers 2a provided in the monitor 2 via the memory controller 31 and the audio I/F 39. In this sound reproduction process, unless the player's accelerator operation is changed (i.e., the braking operation is stopped and the accelerator is opened) or the car object arrives in an idling state at a speed of 0, previously recorded deceleration sound data is continuously reproduced using, as a reproduction start point, the deceleration sound reproduction start address calculated at the above step S53. Since the frequency of the deceleration sound data stored in the ARAM 35 is multiplied by the braking intensity correction coefficient bk, in the case where the intensity of braking power is not 0% (only engine braking is applied), the deceleration sound is reproduced at a relatively low reproduction frequency corresponding to the intensity of braking power. Accordingly, it is possible to accurately reflect, on reproduced engine sound, differences between speeds of the car object and between the numbers of revolutions of the engine, which are all caused by a difference between intensities of braking power.

On the other hand, at the above step S54, if the CPU 30 determines that the car object is in an idling state at a speed of 0, the procedure proceeds to step S60. At step S60, the CPU 30 calculates a sound level correction coefficient for correcting a sound level at which the engine sound is reproduced, and the procedure proceeds to the next step. Processing at step S60 is similar to that at the above step S16, and therefore detailed descriptions thereof are omitted.

Next, the CPU 30 performs a process for loop-reproducing deceleration sound data Dd(m) through Dd(n-1) stored at addresses Ad(m) through Ad(n-1) corresponding to the idling range (step S61). The procedure returns to the above step S60 to repeatedly perform this loop reproduction process so long as the player keeps at least the accelerator closed (step S59) and the car object maintains the idling state at a speed of 0 (step S54). The CPU 30 provides the DSP 34 with an instruction to repeatedly read, as sound data, the deceleration sound data Dd (m) through Dd(n-1) corresponding to the idling range stored at addresses Ad(m) through Ad(n-1) in the ARAM 35. The DSP 34 adjusts the reproduction sound level using the sound level correction coefficient obtained at the above step S60, and outputs the engine sound from the loudspeakers 2a provided in the monitor 2 via the memory controller 31 and the audio I/F 39. If the CPU 30 determines that the player has changed the accelerator operation (i.e., at least the accelerator has been opened), the procedure returns to the above step S41 to continue the procedure.

If the CPU 30 determines at the above step S41 that the engine is not running, the engine sound reproduction process according to the flowchart of FIG. 10 is terminated.

Note that in the second embodiment, as in the first embodiment, although the ARAM 35 has stored therein the acceleration sound data Du and the deceleration sound data Dd, each equally divided into n pieces of data, and each of a portion of the acceleration sound data Du corresponding to the acceleration range and a portion of the deceleration data Dd corresponding to the deceleration range is equally divided into m pieces of data, the number of pieces of data to be divided into may not be equally n or m. By performing the above-described processing based on the flowchart of FIG. 10 and making an address calculation using the above expressions (2) and (3), similar processing can be realized even if the number of pieces of data to be divided into is not equal between the acceleration sound data Du and the deceleration sound data Dd.

As described above, in the game system 1 according to the second embodiment of the present invention, sounds of the engine corresponding to traveling actions, such as acceleration, deceleration, idling, and maximum and constant speed states, of the car object in the game space are reproduced using previously recorded sound data obtained by running a real car, even if in a game which enables the player to arbitrarily control the degree of the accelerator's opening and the intensity of braking power. Therefore, it is possible to reproduce the sound of the engine close to the sound of the real car's engine. Also, by correcting the frequency of acceleration or deceleration sound in accordance with the degree of the accelerator's opening or the intensity of braking power, it is made possible to reproduce a natural sound of acceleration or deceleration.

Note that although the first and second embodiments have been described by taking as an example a racing game in which the car object is controlled by the player's operation so as to travel on a course set in the game space, the present invention is applicable to other types of games. For example, the present invention is applicable in sound reproduction of a game in which an object, such as a train or an airplane, moves at defined rates of acceleration and deceleration.

For reproduction of the engine sound, it is conceivable that either one of engine sounds of acceleration and deceleration is recorded to the ARAM 35, and said one engine sound is reproduced in reverse when the other engine sound is required to be reproduced during the game. However, each of the engine sounds of acceleration and deceleration contains, for example, resonant sounds characteristic thereto, sounds of intake and exhaust, mechanical sounds which are variable depending on the condition of load on the engine, and so on, and it is not possible to reproduce such characteristic sounds by reverse reproduction. Therefore, in order to reproduce a natural sound of acceleration or deceleration using the present invention, it is preferred to use two types of continuous sound data for acceleration and deceleration to reproduce the engine sound in the game.

Further, although the above embodiments have been described with respect to a case where the optical disc 4 is used as a data storage medium for a game program, etc. , a storage medium for recording a game program of the present invention may be provided in other forms. For example, in the case where the game program of the present invention is processed by a portable game apparatus, the game program recorded in a game cartridge or the like may be read to perform processing as described above. The game program may also be supplied through other types of media or communication lines.

While the invention has been described in detail, the foregoing description is in all aspects illustrative and not restrictive. It is understood that numerous other modifications and variations can be devised without departing from the scope of the invention.

## Claims

1.  A game apparatus which represents a game by a game image in which game an object moves in accordance with a player's operation, comprising:

    an operating section (6) for inputting, in accordance with the player's operation, at least acceleration operation input data for accelerating a movement of the object and deceleration operation input data for decelerating a movement of the object (S12 or S42);
    an acceleration sound storage section (351) in which a series of acceleration sound data (Du) of the object are stored into consecutive address spaces, respectively;
    a deceleration sound storage section (352) in which a series of deceleration sound data (Dd) of the object are stored into consecutive address spaces, respectively;
    a read address calculating section (S13, S21, S43, or S53) for selecting, based on operation input data inputted via the operating section (6), either one of the acceleration sound data (Du) and the deceleration sound data (Dd) which are stored in the acceleration sound storage section (351) and the deceleration sound storage section (352), respectively, and for calculating a read start address (Au) of selected sound data corresponding to a current moving speed of the object in a game space;
    a sound data reading section (S17, S25, S48, or S58) for sequentially reading, from the read start address calculated by the read address calculating section, the sound data selected by the read address calculating section (S13 , S21, S43, or S53); and
    a sound output control section (S17, S25, S48 , or S58) for emitting, as a sound, the sound data read by the sound data reading section (S17, S25, S48, or S58).

2.  The game apparatus according to claim 1, wherein for each change from one to the other between the acceleration operation input data and the deceleration operation input data which are inputted via the operating section (6), the read address calculating section (S13, S21, S43, or S53) changes a calculation target at the read start address (Au) from one to the other between an address of the acceleration sound storage section (351) and an address of the deceleration sound storage section (352), while the sound data read section (S17, S25, S48, or S58) sequentially reads, in response to a change of the calculation target of the read address calculating section (S13, S21, S43, or S53), sound data newly targeted for calculation from the read start address (Au), thereby continuously reading different types of sound data before and after the change of the calculation target.

3.  The game apparatus according to claim 1, wherein when the sound data reading section (S17, S25, S48, or S58) is sequentially reading, from the acceleration sound storage section (351), the acceleration sound data (Du) in response to the acceleration operation input data from the operating section (6), if there is an input of the deceleration operation input data from the operating section (6), the read address calculating section (S13, S21, S43, or S53) calculates the read start address (Au) of the deceleration sound storage section (352) based on a read address of the acceleration sound storage section (351) being read by the sound data reading section (S17. S25, S48, or S53).

4.  The game apparatus according to claim 1, wherein when the sound data reading section (S17, S25, S48, or S58) is sequentially reading from the deceleration sound storage section (352), the deceleration sound data (Dd) in response to the deceleration operation input data from the operating section (6), if there is an input of the acceleration operation input data from the operating section (6) - the read address calculating section (S13, S21, S43, or S53) calculates the read start address (Au) of the acceleration sound storage section (351), based on a read address of the deceleration sound storage section (352) being read by the sound data reading section (S17, S25, S48, or S53).

5. The game apparatus according to claim 1 , wherein:

the acceleration sound data (Du) stored in the acceleration sound storage section (351) contains at least sound data corresponding to an acceleration range where a moving entity existing in a real world which corresponds to the object accelerates from a minimum speed to a maximum speed at a constant acceleration rate; and the deceleration sound data (Dd) stored in the deceleration sound storage section (352) contains at least sound data corresponding to a deceleration range where the moving entity existing in the real world which corresponds to the object decelerates from the maximum speed to the minimum speed at a constant deceleration rate.

6. The game apparatus according to claim 5, wherein

the acceleration sound data (Du) stored in the acceleration sound storage section (351) further contains sound data corresponding to a maximum and constant speed range, where the moving entity existing in the real world which corresponds to the object moves at the maximum and constant speed, and the sound data corresponding to a maximum and constant speed range is sequential in address to the sound data corresponding to the acceleration range; and if the acceleration operation input data is continuously inputted from the operating section (6) for a period of a prescribed time or more, the sound data reading section (S17, S25, S48, or S58) repeatedly reads the acceleration sound data (Du) corresponding to the maximum and constant speed range.

7. The game apparatus according to claim 5, wherein

the deceleration sound data (Dd) stored in the deceleration sound storage section (352) further contains sound data corresponding to a minimum and constant speed range, where the moving entity existing in the real world which corresponds to the object moves at the minimum and constant speed, and the sound data corresponding to a minimum and constant speed range is sequential in address to the sound data corresponding to the deceleration range; and if the deceleration operation input data is continuously inputted from the operating section (6) for a period of a prescribed time or more, the sound data reading section (S17, S25 , S48 , or S58) repeatedly reads the deceleration sound data (Dd) corresponding to the minimum and constant speed range.

8. The game apparatus according to claim 1, wherein:

the operating section (6) is able to input acceleration operation input data for accelerating the movement of the object at an arbitrary rate of speed in accordance with a degree of operation designated by the player; and the sound output control section (S17, S25, S48, or S58) includes an acceleration sound frequency correcting section (S45 or S50) for correcting a frequency of the acceleration sound data (Du) read by the sound data reading section (S17, S25, S48, or S58) in accordance with a rate of acceleration movement (ak) indicated by the acceleration operation input data.

9. The game apparatus according to claim 1, wherein:

the operating section (6) is able to input deceleration operation input data for decelerating the movement of the object at an arbitrary rate of speed in accordance with a degree of operation designated by the player; and the sound output control section (S17, S25, S48, or S58) includes a deceleration sound frequency correcting section (S55) for correcting a frequency of the deceleration sound data (Dd) read by the sound data reading section (S17, S25, S48, or S58) in accordance with a rate of deceleration movement (bk) indicated by the deceleration operation input data.

10. The game apparatus according to claim 1, wherein:

the object is a vehicle; and

the action parameter corresponds to a speed of the vehicle.

11. A storage medium having recorded therein a game program causing a computer, which includes an operating section (6) operated by a player, to implement a process for representing a game by a game image in which game an object moves in accordance with the player's operation, the game program causing the computer to implement:

an input step (S12 or S42) for inputting, in accordance with an operation of the operating section (6), at least acceleration operation input data for accelerating a movement of the object and deceleration operation input data for decelerating a movement of the object;

a read address calculating step (S13, S21, S43, or S53) for selecting, based on operation input data inputted at the input step (S12 or S42), either one of the object's acceleration sound data (Du) and deceleration sound data (Dd), which are sequential to each other and previously stored into consecutive address spaces, respectively, and for calculating a read start address (Au) of selected sound data corresponding to a current moving speed of the object in a game space;

a sound data reading step (S17, S25, S48, or S58) for sequentially reading, from the read start address calculated in the read address calculating step, the sound data selected at the read address calculating step (S13, S21, S43, or S53); and

a sound output control step (S17, S25, S48, or S58) for emitting, as a sound, the sound data read at the sound data reading step (S17, S25, S48, or S58).

12. The storage medium having stored therein a game program according to claim 11, wherein for each change from one to the other between the acceleration operation input data and the deceleration operation input data which are inputted via the operating section (6) at the input step (S12 or S42), the read address calculating step (S13, S21, S43, or S53) changes a calculation target at the read start address (Au) from one to the other between an address of the acceleration sound storage section (351) and an address of the deceleration sound storage section (352), while the sound data read step (S17, S25, S48, or S58) sequentially reads, in response to a change of the calculation target at the read address calculating step (S13, S21, S43, or S53), sound data newly targeted for calculation from the read start address (Au), thereby continuously reading different types of sound data before and after the change of the calculation target.

13. The storage medium having recorded therein a game program according to claim 11, wherein when the sound data reading step (S17, S25, S48, or S58) is sequentially reading, from the acceleration sound storage section (351), the acceleration sound data (Du) in response to the acceleration operation input data inputted at the input step (S12 or S42), if the input step (S12 or S42) inputs the deceleration operation input data, the read address calculating step (S13,- S21, S43 , or S53) calculates the read start address (Au) of the deceleration sound storage section (352) based on a read address of the acceleration sound storage section (351) being read at the sound data reading step (S17, S25, S48, or S53).

14. The storage medium having recorded therein a game program according to claim 11, wherein when the sound data reading step (S17, S25, S48, or S58) is sequentially reading, from the deceleration sound storage section (352), the deceleration sound data (Dd) in response to the deceleration operation input data inputted at the input step (S12 or S42), if the input step (S12 or S42) inputs the acceleration operation input data, the read address calculating step (S13, S21, S43, or S53) calculates the read start address (Au) of the acceleration sound storage section (351) based on a read address of the deceleration sound storage section (352) being read at the sound data reading step (S17, S25, S48, or S53).

15. The storage medium having recorded therein a game program according to claim 11, wherein:

the previously stored acceleration sound data (Du) contains at least sound data corresponding to an acceleration range where a moving entity existing in a real world which corresponds to the object accelerates from a minimum speed to a maximum speed at a constant acceleration rate; and

the previously stored deceleration sound data (Dd) contains at least sound data corresponding to a deceleration range where the moving entity existing in a real world which corresponds to the object decelerates from the maximum speed to the minimum speed at a constant deceleration rate.

16. The storage medium having recorded therein a game program according to claim 15, wherein the previously stored acceleration sound data (Du) further contains sound data corresponding to a maximum and constant speed range, where the moving entity existing in a real world which corresponds to the object moves at the maximum and constant speed, and the sound data corresponding to a maximum and constant speed range is sequential in address to the sound data corresponding to the acceleration range; and

if the acceleration operation input data is continuously inputted at the input step (S12 or S42) for a period of a prescribed time or more, the sound data reading step (S17, S25, S48, or S58) repeatedly reads the acceleration sound data (Du) corresponding to the maximum and constant speed range.

17. The storage medium having recorded therein a game program according to claim 15, wherein the previously stored deceleration sound data (Dd) further contains sound data corresponding to a minimum and constant speed range, where the moving entity existing in the real world which corresponds to the object moves at the minimum and constant speed, and the sound data corresponding to a minimum and constant speed range is sequential in address to the sound data corresponding to the deceleration range; and

if the deceleration operation input data is continuously inputted at the input step (S12 or S42) for a period of a prescribed time or more, the sound data reading step (S17, S25, S48, or S58) repeatedly reads the deceleration sound data (Dd) corresponding to the minimum and constant speed range.

18. The storage medium having recorded therein a game program according to claim 11, wherein:

the input step (S12 or S42) inputs acceleration operation input data for accelerating the movement of the object at an arbitrary rate of speed in accordance with a degree of operation designated by the player via the operating section (6); and
the sound output control step (S17, S25, S48, or S58) includes an acceleration sound frequency correcting step (S45 or S50) for correcting a frequency of the acceleration sound data (Du) read at the sound data reading step (S17, S25, S48, or S58) in accordance with a rate of acceleration movement (ak) indicated by the acceleration operation input data.

19. The storage medium having recorded therein a game program according to claim 11, wherein:

the input step (S12 or S42) inputs deceleration operation input data for decelerating the movement of the object at an arbitrary rate of speed in accordance with a degree of operation designated by the player via the operating section (6); and
the sound output control step (S17, S25, S48, or S58) includes a deceleration sound frequency correcting step (S55) for correcting a frequency of the deceleration sound data (Dd) read at the sound data reading step (S17, S25, S48, or S58) in accordance with a rate of deceleration movement (bk) indicated by the deceleration operation input data.

20. The storage medium having recorded therein a game program according to claim 11, wherein:

the object is a vehicle; and
the action parameter corresponds to a speed of the vehicle.

**Patentansprüche**

1. Eine Spielvorrichtung, die ein Spiel darstellt durch ein Spielbild, wobei sich in dem Spiel ein Objekt bewegt in Übereinstimmung mit einer Operation eines Spielers, umfassend:

einen Bedienabschnitt (6) zum Eingeben in Übereinstimmung mit der Operation des Spielers von zumindest Beschleunigungsoperations-Eingabedaten zum Beschleunigen einer Bewegung des Objekts und von Verzögerungsoperations-Eingabedaten zum Verzögern einer Bewegung des Objekts (S12 oder S42);
einen Beschleunigungsgeräusch-Speicherabschnitt (351), in dem eine Reihe von Beschleunigungsgeräuschdaten (Du) des Objekts gespeichert sind, jeweils in aufeinanderfolgenden Adressräumen;
einen Verzögerungsgeräusch-Speicherabschnitt (352), in dem eine Reihe von Verzögerungsgeräuschdaten (Dd) des Objekts gespeichert sind, jeweils in aufeinanderfolgenden Adressräumen;
einen Leseadress-Berechnungsabschnitt (S13, S21, S43 oder S53) zum Auswählen auf der Basis von Operationseingabedaten, die über den Bedienabschnitt (6) eingegeben wurden, eines von den Beschleunigungsgeräuschdaten (Du) und den Verzögerungsgeräuschdaten (Dd), welche jeweils gespeichert sind in dem Beschleunigungsgeräusch-Speicherabschnitt (351) und dem Verzögerungsgeräusch-Speicherabschnitt (352), und zum Berechnen einer Lesestartadresse (Au) von ausgewählten Geräuschdaten, die einer gegenwärtigen Bewegungsgeschwindigkeit des Objekts in einem Spielraum entsprechen;
einen Geräuschdaten-Leseabschnitt (S 17, S25, S48 oder S58) zum sequentiellen Lesen der Geräuschdaten, die ausgewählt sind durch den Leseadress-Berechnungsabschnitt (S 13, S21, S43 oder S53), von der Lesestartadresse, die durch den Leseadress-Berechnungsabschnitt berechnet ist; und
einen Geräuschausgabe-Steuerabschnitt (S 17, S25, S48 oder S58) zum Ausgeben der Geräuschdaten als ein Geräusch, die durch den Geräuschdaten-Leseabschnitt (S 17, S25, S48 oder S58) gelesen worden sind.

2.  Spielvorrichtung nach Anspruch 1, bei der der Leseadress-Berechnungsabschnitt (S13, S21, S43 oder S53) für jede Änderung von einem zu dem anderen zwischen den Beschleunigungsoperations-Eingabedaten und den Verzögerungsoperations-Eingabedaten, die über den Bedienabschnitt (6) eingegeben wurden, ein Berechnungsziel bei der Lesestartadresse (Au) ändert von einem zu dem anderen zwischen einer Adresse des Beschleunigungsgeräusch-Speicherabschnitts (351) und einer Adresse des Verzögerungsgeräusch-Speicherabschnitts (352), während der Geräuschdaten-Leseabschnitt (S 17, S25, S48 oder S58) in Reaktion auf eine Änderung des Berechnungsziels des Leseadress-Berechnungsabschnitts (S 13, S21, S43 oder S53) Geräuschdaten sequentiell liest, auf die für Berechnung neu gezielt wird von der Lesestartadresse (Au), wodurch kontinuierlich unterschiedliche Typen von Geräuschdaten vor und nach der Änderung des Berechnungsziels gelesen werden.

3.  Spielvorrichtung nach Anspruch 1, bei der, wenn der Geräuschdaten-Leseabschnitt (S 17, S25, S48 oder S58) sequentiell von dem Beschleunigungsgeräusch-Speicherabschnitt (351) die Beschleunigungsgeräuschdaten (Du) liest in Reaktion auf die Beschleunigungsoperations-Eingabedaten von dem Bedienabschnitt (6), wenn es dort eine Eingabe von den Verzögerungsoperations-Eingabedaten von dem Bedienabschnitt (6) gibt, berechnet der Leseadress-Berechnungsabschnitt (S13, S21, S43 oder S53) die Lesestartadresse (Au) des Verzögerungsgeräusch-Speicherabschnitts (352) basierend auf einer Leseadresse des Beschleunigungsgeräusch-Speicherabschnitts (351), die gelesen wird durch den Geräuschdaten-Leseabschnitt (S17, S25, S48 oder S53),

4.  Spielvorrichtung nach Anspruch 1, bei der, wenn der Geräuschdaten-Leseabschnitt (S17, S25, S48 oder S53) sequentiell von dem Verzögerungsgeräusch-Speicherabschnitt (352) die Verzögerungsgeräuschdaten (Dd) liest in Reaktion auf die Verzögerungsoperations-Eingabedaten von dem Bedienabschnitt (6), wenn es dort eine Eingabe von den Beschleunigungsoperations-Eingabedaten von dem Bedienabschnitt (6) gibt, berechnet der Leseadress-Berechnungsabschnitt (S13, S21, S43 oder S53) die Lesestartadresse (Au) des Beschleunigungsgeräusch-Speicherabschnitts (351) basierend auf einer Leseadresse des Verzögerungsgeräusch-Speicherabschnitts (352), die gelesen wird durch den Geräuschdaten-Leseabschnitt (S17, S25, S48 oder S53).

5.  Spielvorrichtung nach Anspruch 1, bei der:

    die Beschleunigungsgeräuschdaten (Du), die in dem Beschleunigungsgeräusch-Speicherabschnitt (351) gespeichert sind, zumindest Geräuschdaten enthalten, die einem Beschleunigungsbereich entsprechen, wo eine sich bewegende Entität, die in einer realen Welt existiert, welche dem Objekt entspricht, beschleunigt von einer minimalen Geschwindigkeit zu einer maximalen Geschwindigkeit bei einer konstanten Beschleunigungsrate; und
    die Verzögerungsgeräuschdaten (Dd), die in dem Verzögenmgsgeräusch-Speicherabschnitt (352) gespeichert sind, zumindest Geräuschdaten enthalten, die einem Verzögerungsbereich entsprechen, wo die sich bewegende Entität, die in der realen Welt existiert, welche dem Objekt entspricht, von der maximalen Geschwindigkeit zu der minimalen Geschwindigkeit verzögert bei einer konstanten Verzögerungsrate.

6.  Spielvorrichtung nach Anspruch 5, bei der die Beschleunigungsgeräuschdaten (Du), die in dem Beschleunigungsgeräusch-Speicherabschnitt (351) gespeichert sind, weiterhin Geräuschdaten umfassen, die einem maximalen und konstanten Geschwindigkeitsbereich entsprechen, wo die sich bewegen Entität, die in der realen Welt existiert, welche dem Objekt entspricht, sich bei der maximalen und konstanten Geschwindigkeit bewegt, und wobei die Geräuschdaten, die einem maximalen und konstanten Geschwindigkeitsbereich entsprechen, in Adressen sequentiell sind zu den Geräuschdaten, die dem Beschleunigungsbereich entsprechen; und
    wenn die Beschleunigungsoperations-Eingabedaten kontinuierlich eingegeben werden von dem Bedienabschnitt (6) für einer Periode einer vorbestimmten Zeit oder mehr, liest der Geräuschdaten-Leseabschnitt (S 17, S25, S48 oder S58) wiederholend die Beschleunigungsgeräuschdaten (Du), welche dem maximalen und konstanten Geschwindigkeitsbereich entsprechen.

7.  Spielvorrichtung nach Anspruch 5, bei der die Verzögerungsgeräuschdaten (Dd), die in dem Verzögerungsgeräusch-Speicherabschnitt (352) gespeichert sind, weiterhin Geräuschdaten umfassen, die einem minimalen und einem konstanten Geschwindigkeitsbereich entsprechen, wo die sich bewegen Entität, die in der realen Welt existiert, welche dem Objekt entspricht, sich bei der minimalen und konstanten Geschwindigkeit bewegt, und wobei die Geräuschdaten, die einem minimalen und konstanten Geschwindigkeitsbereich entsprechen, in Adressen sequentiell sind zu den Geräuschdaten, die dem Verzögerungsbereich entsprechen; und

wenn die Verzögerungsoperations-Eingabedaten kontinuierlich eingegeben werden von dem Bedienabschnitt (6) für einer Periode von einer vorbestimmten Zeit oder mehr, liest der Geräuschdaten-Leseabschnitt (S 17, S25, S48 oder S58) wiederholend die Verzögerungsgeräuschdaten (Dd), welche dem minimalen und konstanten Geschwindigkeitsbereich entsprechen.

8.  Spielvorrichtung nach Anspruch 1, bei der:

der Bedienabschnitt (6) in der Lage ist, Beschleunigungsoperationsdaten einzugeben zum Beschleunigen der Bewegung des Objekts bei einer beliebigen Geschwindigkeitsstufe in Übereinstimmung mit einem Grad der Operation, die durch den Spieler bestimmt wird; und

der Geräuschausgabe-Steuerabschnitt (S 17, S25, S48 oder S58) einen Beschleunigungsgeräusch-Frequenzkorrekturabschnitt (S45 oder S50) einschließt zum Korrigieren einer Frequenz der Beschleunigungsgeräuschdaten (Du), die durch den Geräuschdaten-Leseabschnitt (S 17, S25, S48 oder S58) gelesen werden in Übereinstimmung mit einer Rate der Beschleunigungsbewegung (ak), die bestimmt ist durch die Beschleunigungsoperations-Eingabedaten.

9.  Spielvorrichtung nach Anspruch 1, bei der:

der Bedienabschnitt (6) in der Lage ist, Verzögerungsoperationsdaten einzugeben zum Verzögern der Bewegung des Objekts bei einer beliebigen Geschwindigkeitsstufe in Übereinstimmung mit einem Grad der Operation, die durch den Spieler bestimmt ist; und

der Geräuschausgabe-Steuerabschnitt (S 17, S25, S48 oder S58) einen Verzögerungsgeräusch-Frequenzkorrekturabschnitt (S55) einschließt zum Korrigieren einer Frequenz der Verzögerungsgeräuschdaten (Dd), die durch den Geräuschdaten-Leseabschnitt (S 17, S25, S48 oder S58) gelesen werden in Übereinstimmung mit einer Rate der Verzögerungsbewegung (bk), die angezeigt wird durch die Verzögerungsoperations-Eingabedaten.

10. Spielvorrichtung nach Anspruch 1, bei der:

das Objekt ein Fahrzeug ist; und

der Aktionsparameter einer Geschwindigkeit des Fahrzeugs entspricht.

11. Ein Speichermedium, das darauf ein Spielprogramm gespeichert hat, welches einen Computer veranlasst, der einen Bedienabschnitt (6) einschließt, welcher durch einen Spieler bedient wird, einen Prozess zu implementieren zum Darstellen eines Spiels durch ein Spielbild, wobei sich in dem Spiel ein Objekt bewegt in Übereinstimmung mit der Operation des Spielers, wobei das Spielprogramm den Computer veranlasst zu implementieren:

einen Eingabeschritt (S 12 oder S42) zum Eingeben in Übereinstimmung mit einer Operation des Bedienabschnitts (6) von zumindest Beschleunigungsoperations-Eingabedaten zum Beschleunigen einer Bewegung des Objekts und von Verzögerungsoperations-Eingabedaten zum Verzögern einer Bewegung des Objekts;

einen Leseadress-Berechnungsschritt (S13, S21, S43 oder S53) zum Auswählen, basierend auf Operationseingabedaten, die bei dem Eingabeschritt (S 12 oder S42) eingegeben werden, eines von den Beschleunigungsgeräuschdaten (Du) und den Verzögerungsgeräuschdaten (Dd) des Objekts, welche sequentiell zueinander sind und jeweils zuvor gespeichert sind in aufeinanderfolgenden Adressräumen, und zum Berechnen einer Lesestartadresse (Au) von ausgewählten Geräuschdaten, die einer gegenwärtigen Bewegungsgeschwindigkeit des Objekts in einem Spielraum entsprechen;

einen Geräuschdaten-Leseschritt (S17, S25, S48 oder S58) zum sequentiellen Lesen der Geräuschdaten von der Lesestartadresse, die in dem Leseadress-Berechnungsschritt berechnet wurde, welche ausgewählt wurden bei dem Leseadress-Berechnungsschritt (S13, S21, S43 oder S53); und

einen Geräuschausgabe-Steuerschritt (S17, S25, S48 oder S58) zum Ausgeben der Geräuschdaten als ein Geräusch, die bei dem Geräuschdaten-Leseschritt (S 17, S25, S48 oder S58) gelesen wurden.

12. Speichermedium, das darauf ein Spielprogramm nach Anspruch 11 gespeichert hat, bei dem für jede Änderung von einem zu dem anderen zwischen den Beschleunigungsoperations-Eingabedaten und den Verzögerungsoperations-Eingabedaten, welche über den Bedienabschnitt (6) bei dem Eingabeschritt (S 12 oder S42) eingegeben werden, der Leseadress-Berechnungsschritt (S13, S21, S43 oder S53) ein Berechnungsziel ändert bei der Lesestartadresse (Au) von einer zu der anderen zwischen einer Adresse von dem Beschleunigungsgeräusch-Speicherabschnitt (351) und einer Adresse des Verzögerungsgeräusch-Speicherabschnitts (352), während der Geräuschdaten-Leseschritt (S17, S25, S48 oder S58) sequentiell in Reaktion auf eine Änderung von dem Berechnungsziel bei dem Leseadress-Berechnungsschritt (S 13, S21, S43 oder S53) Geräuschdaten liest, auf die neu für Berechnung gezielt wird von der Lesestartadresse (Au), wodurch kontinuierlich unterschiedliche Typen von Geräuschdaten vor und nach der Änderung des Berechnungsziels gelesen werden.

13. Speichermedium, das darauf ein Spielprogramm gemäß Anspruch 11 gespeichert hat, bei dem, wenn der Geräuschdaten-Leseschritt (S 17, S25, S48 oder S58) sequentiell von dem Beschleunigungsgeräusch-Speicherabschnitt (351) die Beschleunigungsgeräuschdaten (Du) liest in Reaktion auf die Beschleunigungsoperations-Eingabedaten, die bei dem Eingabeschritt (S 12 oder S42) eingegeben werden, wenn der Eingabeschritt (S 12 oder S42) die Verzögerungsoperations-Eingabedaten eingibt, der Leseadress-Berechnungsschritt (S 13, S21, S43 oder S53) die Lesestartadresse (Au) des Verzögerungsgeräusch-Speicherabschnitts (352) berechnet basierend auf einer Leseadresse des Beschleunigungsgeräusch-Speicherabschnitts (351), welche gelesen werden bei dem Geräuschdaten-Leseschritt (S17, S25, S48 oder S53).

14. Speichermedium, das darauf ein Spielprogramm gemäß Anspruch 11 gespeichert hat, bei dem, wenn der Geräuschdaten-Leseschritt (S 17, S25, S48 oder S58) sequentiell von dem Verzögerungsgeräusch-Speicherabschnitt (352) die Verzögerungsgeräuschdaten (Dd) liest in Reaktion auf die Verzögerungsoperations-Eingabedaten, die bei dem Eingabeschritt (S 12 oder S42) eingegeben werden, wenn der Eingabeschritt (S 12 oder S42) die Beschleunigungsoperations-Eingabedaten eingibt, der Leseadress-Berechnungsschritt (S 13, S21, S43 oder S53) die Lesestartadresse (Au) des Beschleunigungsgeräusch-Speicherabschnitts (351) berechnet basierend auf einer Leseadresse des Verzögerungsgeräusch-Speicherabschnitts (352), welche gelesen werden bei dem Geräuschdaten-Leseschritt (S 17, S25, S48 oder S53).

15. Speichermedium, das darauf ein Spielprogramm gemäß Anspruch 11 gespeichert hat, bei dem:

die zuvor gespeicherten Beschleunigungsgeräuschdaten (Du) zumindest Geräuschdaten enthalten entsprechend zu einem Beschleunigungsbereich, wo eine sich bewegende Entität, die in einer realen Welt existiert, die dem Objekt entspricht, beschleunigt von einer minimalen Geschwindigkeit zu einer maximalen Geschwindigkeit bei einer konstanten Beschleunigungsrate; und
die zuvor gespeicherten Verzögerungsgeräuschdaten (Dd) zumindest Geräuschdaten enthalten entsprechend zu einem Verzögerungsbereich, wo die sich bewegende Entität, die in einer realen Welt existiert, die dem Objekt entspricht, verzögert von der maximalen Geschwindigkeit zu der minimalen Geschwindigkeit bei einer konstanten Verzögerungsrate.

16. Speichermedium das darauf ein Spielprogramm nach Anspruch 15 gespeichert hat, bei dem die zuvor gespeicherten Beschleunigungsgeräuschdaten (Du) weiter Geräuschdaten umfassen entsprechend einem maximalen und konstanten Geschwindigkeitsbereich, wo die sich bewegende Entität, die in einer realen Welt existiert, welche dem Objekt entspricht, sich bewegt bei der maximalen und konstanten Geschwindigkeit, und wobei die Geräuschdaten, die einem maximalen und konstanten Geschwindigkeitsbereich entsprechen, sequentiell in Adressen sind zu den Geräuschdaten, die dem Beschleunigungsbereich entsprechen: und wenn die Beschleunigungsoperations-Eingabedaten kontinuierlich eingegeben werden bei dem Eingabeschritt (S 12 oder S42) für eine Periode einer vorbestimmten Zeit oder mehr, liest der Geräuschdaten-Leseschritt (S17, S25, S48 oder S58) wiederholend die Beschleunigungsgeräuschdaten (Du), die dem maximalen und konstanten Geschwindigkeitsbereich entsprechen.

17. Speichermedium, das darauf ein Spielprogramm nach Anspruch 15 gespeichert hat, wobei die zuvor gespeicherten Verzögerungsgeräuschdaten (Dd) weiterhin Geräuschdaten umfassen entsprechend einem minimalen und konstanten Geschwindigkeitsbereich, wo die sich bewegende Entität, die in der realen Welt existiert, welche dem Objekt entspricht, sich bei der minimalen und konstanten Geschwindigkeit bewegt, und wobei die Geräuschdaten, die einem minimalen und konstanten Geschwindigkeitsbereich entsprechen, sequentiell in Adressen zu den Geräuschdaten sind, die dem Verzögerungsbereich entsprechen; und wenn die Verzögerungsoperations-Eingabedaten kontinuierlich eingegeben werden bei dem Eingabeschritt (S 12 oder S42) für eine Periode einer vorbestimmten Zeit oder mehr, liest der Geräuschdaten-Leseschritt (S 17, S25, S48 oder S58) wiederholend die Verzögerungsgeräuschdaten (Dd), die dem minimalen und konstanten Geschwindigkeitsbereich entsprechen.

**18.** Speichermedium, das darauf ein Spielprogramm nach Anspruch 11 gespeichert hat, bei dem:

der Eingabeschritt (S 12 oder S42) Beschleunigungsoperations-Eingabedaten eingibt zum Beschleunigen der Bewegung des Objekts bei einer beliebigen Geschwindigkeitsstufe in Übereinstimmung mit einem Grad der Operation, die durch den Spieler über den Bedienabschnitt (6) bestimmt wird; und

der Geräuschausgabe-Steuerschritt (S 17, S25, S48 oder S58) einen Beschleunigungsgeräusch-Frequenzkorrekturschritt (S45 oder S50) einschließt zum Korrigieren einer Frequenz der Beschleunigungsgeräuschdaten (Du), die bei dem Geräuschdaten-Leseschritt (S 17, S25, S48 oder S58) gelesen werden in Übereinstimmung mit einer Rate der Beschleunigungsbewegung (ak), die durch die Beschleunigungsoperations-Eingabedaten angezeigt wird.

**19.** Speichermedium, das darauf ein Spielprogramm nach Anspruch 11 gespeichert hat, bei dem:

der Eingabeschritt (S 12 oder S42) Verzögerungsoperations-Eingabedaten eingibt zum Verzögern der Bewegung des Objekts bei einer beliebigen Geschwindigkeitsstufe in Übereinstimmung mit einem Grad der Operation, die durch den Spieler über den Bedienabschnitt (6) bestimmt ist; und

der Geräuschausgabe-Steuerschritt (S 17, S25, S48 oder S58) einen Verzögerungsgeräusch-Frequenzkorrekturschritt (S55) einschließt zum Korrigieren einer Frequenz der Verzögerungsgeräuschdaten (Dd), die bei dem Geräuschdaten-Leseschritt (S17, S25, S48 oder S58) gelesen werden in Übereinstimmung mit einer Rate der Verzögerungsbewegung (bk), die angezeigt wird durch die Verzögerungsoperations-Eingabedaten.

**20.** Speichermedium, das darauf ein Spielprogramm nach Anspruch 11 gespeichert hat, bei dem:

das Objekt ein Fahrzeug ist; und
der Aktionsparameter einer Geschwindigkeit des Fahrzeugs entspricht.

**Revendications**

**1.** Appareil de jeu qui représente un jeu par une image de jeu, dans lequel jeu un objet se déplace conformément à une opération d'un joueur, comportant:

une section d'opération (6) pour délivrer en entrée, conformément à une opération de joueur, au moins des données d'entrée d'opération d'accélération pour accélérer un mouvement de l'objet et des données d'entrée d'opération de décélération pour décélérer un mouvement de l'objet (S12 ou S42),

une section de mémorisation de sons d'accélération (351) dans laquelle une série de données de sons d'accélération (Du) de l'objet sont mémorisées dans des espaces d'adresses consécutifs, respectivement,

une section de mémorisation de sons de décélération (352) dans laquelle une série de données de sons de décélération (Dd) de l'objet sont mémorisées dans des espaces d'adresses consécutifs, respectivement,

une section de calcul d'adresse de lecture (S13, S21, S43, ou S53) pour sélectionner, d'après des données d'entrée d'opération entrées via la section d'opération (6), des données parmi les données de sons d'accélération (Du) et les données de sons de décélération (Dd) qui sont mémorisées dans la section de mémorisation de sons d'accélération (351) et la section de mémorisation de sons de décélération (352), respectivement, et pour calculer une adresse de début de lecture (Au) de données de sons sélectionnées correspondant à une vitesse de déplacement courante de l'objet dans un espace de jeu,

une section de lecture de données de sons (S17, S25, S48, ou S58) pour lire séquentiellement, à partir de l'adresse de début de lecture calculée par la section de calcul d'adresse de lecture, les données de sons sélectionnées par la section de calcul d'adresse de lecture (S13, S21, S43, ou S53), et

une section de commande de sortie de sons (S17, S25, S48, ou S58) pour émettre, sous la forme d'un son, les données de sons lues par la section de lecture de données de sons (S17, S25, S48, ou S58).

**2.** Appareil de jeu selon la revendication 1, dans lequel pour chaque changement des unes aux autres entre les données d'entrée d'opération d'accélération et les données d'entrée d'opération de décélération qui sont entrées via la section d'opération (6), la section de calcul d'adresse de lecture (S13, S21, S43, ou S53) change une cible de calcul à l'adresse de début de lecture (Au) de l'une à l'autre entre une adresse de la section de mémorisation de sons d'accélération (351) et une adresse de la section de mémorisation de sons de décélération (352), pendant que la section de lecture de données de sons (S17, S25, S48, ou S58) lit séquentiellement, en réponse à un changement de la cible de calcul de la section de calcul d'adresse de lecture (S13, S21, S43, ou S53), des données de sons nouvellement ciblées pour le calcul à partir de l'adresse de début de lecture (Au), de manière à lire de manière continue différents types de données de sons avant et après le changement de la cible de calcul.

3. Appareil de jeu selon la revendication 1, dans lequel, lorsque la section de lecture de données de sons (S17, S25, S48, ou S58) lit séquentiellement, à partir de la section de mémorisation de sons d'accélération (351), les données de sons d'accélération (Du) en réponse aux données d'entrée d'opération d'accélération provenant de la section d'opération (6), s'il y a une entrée des données d'entrée d'opération de décélération à partir de la section d'opération (6), la section de calcul d'adresse de lecture (Sl3, S21, S43, ou S53) calcule l'adresse de début de lecture (Au) de la section de mémorisation de sons de décélération (352) sur la base d'une adresse de lecture de la section de mémorisation de sons d'accélération (351) lue par la section de lecture de données de sons (Sl7, 525, S48, ou S58).

4. Appareil de jeu selon la revendication 1, dans lequel, lorsque la section de lecture de données de sons (S17, S25, S48, ou S58) lit séquentiellement, à partir de la section de mémorisation de sons de décélération (352), les données de sons de décélération (Dd) en réponse aux données d'entrée d'opération de décélération provenant de la section d'opération (6), s'il y a une entrée des données d'entrée d'opération d'accélération provenant de la section d'opération (6), la section de calcul d'adresse de lecture (S13, S21, S43, ou S53) calcule l'adresse de début de lecture (Au) de la section de mémorisation de sons d'accélération (351) sur la base d'une adresse de lecture de la section de mémorisation de sons de décélération (352) lue par la section de lecture de données de sons (S17, S25, S48, ou S58).

5. Appareil de jeu selon la revendication 1, dans lequel :

les données de sons d'accélération (Du) mémorisées dans la section de mémorisation de sons d'accélération (351) contiennent au moins des données de sons correspondant à une plage d'accélération où une entité mobile se trouvant dans un monde réel qui correspond à l'objet accélère à partir d'une vitesse minimale à une vitesse maximale à un rapport d'accélération constant, et
les données de sons de décélération (Dd) mémorisées dans la section de mémorisation de sons de décélération (352) contiennent au moins des données de sons correspondant à une plage de décélération où l'entité mobile se trouvant dans le monde réel qui correspond à l'objet décélère de la vitesse maximale à la vitesse minimale à un rapport de décélération constant.

6. Appareil de jeu selon la revendication 5, dans lequel:

les données de sons d'accélération (Du) mémorisées dans la section de mémorisation de sons d'accélération (351) contiennent de plus des données de sons correspondant à une plage de vitesse maximale et constante, où l'entité mobile se trouvant dans le monde réel qui correspond à l'objet se déplace à la vitesse maximale et constante, et les données de sons correspondant à une plage de vitesse maximale et constante ont des adresses séquentielles aux données de sons correspondant à la plage d'accélération, et
si les données d'entrée d'opération d'accélération sont délivrées en entrée de manière continue par la section d'opération (6) pour une période d'une durée prescrite ou plus, la section de lecture de données de sons (S17, S25, S48, ou S58) lit de manière répétée les données de sons d'accélération (Du) correspondant à la plage de vitesse maximale et constante.

7. Appareil de jeu selon la revendication 5, dans lequel

les données de sons de décélération (Dd) mémorisées dans la section de mémorisation de sons de décélération (352) contiennent de plus des données de sons correspondant à une plage de vitesse minimale et constante, où l'entité mobile se trouvant dans le monde réel qui correspond à l'objet se déplace à la vitesse minimale et constante, et les données de sons correspondant à une plage de vitesse minimale et constante ont des adresses séquentielles aux données de sons correspondant à la plage de décélération, et
si les données d'entrée d'opération de décélération sont entrées de manière continue par la section d'opération (6) pour une période d'une durée prescrite ou plus, la section de lecture de données de sons (S17, S25, S48, ou S58) lit de manière répétée les données de sons de décélération (Dd) correspondant à la plage de vitesse minimale et constante.

8. Appareil de jeu selon la revendication 1, dans lequel:

la section d'opération (6) est capable d'entrer des données d'entrée d'opération d'accélération pour accélérer le mouvement de l'objet à un rapport arbitraire de vitesse conformément à un niveau d'opération désigné par le joueur, et

la section de commande de sortie de sons (S17, S25, S48, ou S58) inclut une section de correction de fréquence de sons d'accélération (S45 ou S50) pour corriger une fréquence des données de sons d'accélération (Du) lues par la section de lecture de données de sons (S17, S25, S48, ou S58) conformément à un rapport de mouvement d'accélération (ak) indiqué par les données d'entrée d'opération d'accélération.

9. Appareil de jeu selon la revendication 1, dans lequel :

la section d'opération (6) est capable d'entrer des données d'entrée d'opération de décélération pour décélérer le mouvement de l'objet à un rapport arbitraire de vitesse conformément à un niveau d'opération désigné par le joueur, et

la section de commande de sortie de sons (S17, S25, S48, ou S58) inclut une section de correction de fréquence de sons de décélération (S55) pour corriger une fréquence des données de sons de décélération (Dd) lues par la section de lecture de données de sons (S17, S25, S48, ou S58) conformément à un rapport de mouvement de décélération (bk) indiqué par les données d'entrée d'opération de décélération.

10. Appareil de jeu selon la revendication 1, dans lequel :

l'objet est un véhicule, et

le paramètre d'action correspond à une vitesse du véhicule.

11. Support de mémorisation sur lequel est enregistré un programme de jeu amenant un ordinateur, qui inclut une section d'opération (6) actionnée par un joueur, à mettre en oeuvre un traitement pour représenter un jeu par une image de jeu dans lequel jeu un objet se déplace conformément à une opération du joueur, le programme de jeu amenant l'ordinateur à mettre en oeuvre:

une étape d'entrée (S12 ou S42) pour entrer, conformément à une opération de la section d'opération (6), au moins des données d'entrée d'opération d'accélération pour accélérer un mouvement de l'objet et des données d'entrée d'opération de décélération pour décélérer un mouvement de l'objet,

une étape de calcul d'adresse de lecture (S13, S21, S43, ou S53) pour sélectionner, sur la base de données d'entrée d'opération entrées à l'étape d'entrée (S12 ou S42), des données parmi les données de sons d'accélération (Du) et les données de sons de décélération (Dd) de l'objet, qui sont séquentielles les unes aux autres et préalablement mémorisées dans des espaces d'adresses consécutifs, respectivement, et pour calculer une adresse de début de lecture (Au) de données de sons sélectionnées correspondant à une vitesse de mouvement courante de l'objet dans un espace de jeu,

une étape de lecture de données de sons (S17, S25, S48, ou S58) pour lire séquentiellement, à partir de l'adresse de début de lecture calculée dans l'étape de calcul d'adresse de lecture, les données de sons sélectionnées à l'étape de calcul d'adresse de lecture (S13, S21, S43, ou S53), et

une étape de commande de sortie de sons (S17, S25, S48, ou S58) pour émettre, sous la forme d'un son, les données de sons lues à l'étape de lecture de données de sons (S17, S25, S48, ou S58).

12. Support de mémorisation sur lequel est enregistré un programme de jeu selon la revendication 11, dans lequel, pour chaque changement entre les données d'entrée d'opération d'accélération et les données d'entrée d'opération de décélération qui sont entrées via la section d'opération (6) à l'étape d'entrée (S12 ou S42), l'étape de calcul d'adresse de lecture (S13, S21, S43, ou S53) change une cible de calcul à l'adresse de début de lecture (Au) de l'une à l'autre entre une adresse de la section de mémorisation de sons d'accélération (351) et une adresse de la section de mémorisation de sons de décélération (352), pendant que l'étape de lecture de données de sons (S17, S25, S48, ou S58) lit séquentiellement, en réponse à un changement de la cible de calcul à l'étape de calcul d'adresse de lecture (S13, S21, S43, ou S53), des données de sons nouvellement ciblées en vue d'un calcul à partir de l'adresse de début de lecture (Au), de manière à lire de manière continue différents types de données de sons avant et après le changement de la cible de calcul.

13. Support de mémorisation sur lequel est enregistré un programme de jeu selon la revendication 11, dans lequel, lorsque l'étape de lecture de données de sons (S17, S25, S48, ou S58) lit séquentiellement, à partir de la section de mémorisation de sons d'accélération (351), les données de sons d'accélération (Du) en réponse aux données d'entrée d'opération d'accélération entrées à l'étape d'entrée (S12 ou S42), si l'étape d'entrée (S12 ou S42) entre les données d'entrée d'opération de décélération, l'étape de calcul d'adresse de lecture (S13, S21, S43, ou S53) calcule l'adresse de début de lecture (Au) de la section de mémorisation de sons de décélération (352) sur la base d'une adresse de lecture de la section de mémorisation de sons d'accélération (351) lue à l'étape de lecture de données de sons (Sl7, S25, S48, ou S58).

**14.** Support de mémorisation sur lequel est enregistré un programme de jeu selon la revendication 11, dans lequel, lorsque l'étape de lecture de données de sons (S17, S25, S48, ou S58) lit séquentiellement, à partir de la section de mémorisation de sons de décélération (352), les données de sons de décélération (Dd) en réponse aux données d'entrée d'opération de décélération entrées à l'étape d'entrée (S12 ou S42), si l'étape d'entrée (S12 ou S42) entre les données d'entrée d'opération d'accélération, l'étape de calcul d'adresse de lecture (S13, S21, S43, ou S53) calcule l'adresse de début de lecture (Au) de la section de mémorisation de sons d'accélération (351) sur la base d'une adresse de lecture de la section de mémorisation de sons de décélération (352) lue à l'étape de lecture de données de sons (S17, S25, S48, ou S58).

**15.** Support de mémorisation sur lequel est enregistré un programme de jeu selon la revendication 11, dans lequel:

les données de sons d'accélération préalablement mémorisées (Du) contiennent au moins des données de sons correspondant à une plage d'accélération où une entité mobile se trouvant dans un monde réel qui correspond à l'objet accélère à partir d'une vitesse minimale à une vitesse maximale à un rapport d'accélération constant, et
les données de sons de décélération préalablement mémorisées (Dd) contiennent au moins des données de sons correspondant à une plage de décélération où l'entité mobile se trouvant dans un monde réel qui correspond à l'objet décélère de la vitesse maximale à la vitesse minimale à un rapport de décélération constant.

**16.** Support de mémorisation sur lequel est enregistré un programme de jeu selon la revendication 15, dans lequel les données de sons d'accélération préalablement mémorisées (Du) contiennent de plus des données de sons correspondant à une plage de vitesse maximale et constante, où l'entité mobile se trouvant dans un monde réel qui correspond à l'objet se déplace à la vitesse maximale et constante, et les données de sons correspondant à une plage de vitesse maximale et constante ont des adresses séquentielles aux données de sons correspondant à la plage d'accélération, et

si les données d'entrée d'opération d'accélération sont entrées de manière continue à l'étape d'entrée (S12 ou S42) pour une période d'une durée prescrite ou plus, l'étape de lecture de données de sons (S17, S25, S48, ou S58) lit de manière répétée les données de sons d'accélération (Du) correspondant à la plage de vitesse maximale et constante.

**17.** Support de mémorisation sur lequel est enregistré un programme de jeu selon la revendication 15, dans lequel les données de sons de décélération préalablement mémorisées (Dd) contiennent de plus des données de sons correspondant à une plage de vitesse minimale et constante, où l'entité mobile se trouvant dans le monde réel qui correspond à l'objet se déplace à la vitesse minimale et constante, et les données de sons correspondant à une plage de vitesse minimale et constante ont des adresses séquentielles aux données de sons correspondant à la plage de décélération, et

si les données d'entrée d'opération de décélération sont entrées de manière continue à l'étape d'entrée (S12 ou S42) pour une période d'une durée prescrite ou plus, l'étape de lecture de données de sons (S17, S25, S48, ou S58) lit de manière répétée les données de sons de décélération (Dd) correspondant à la plage de vitesse minimale et constante.

**18.** Support de mémorisation sur lequel est enregistré un programme de jeu selon la revendication 11, dans lequel:

l'étape d'entrée (S12 ou S42) entre des données d'entrée d'opération d'accélération pour accélérer le mouvement de l'objet à un rapport arbitraire de vitesse conformément à un niveau d'opération désigné par le joueur via la section d'opération (6), et
l'étape de commande de sortie de sons (S17, S25, S48, ou S58) inclut une étape de correction de fréquence de sons d'accélération (S45 ou S50) pour corriger une fréquence des données de sons d'accélération (Du) lues à l'étape de lecture de données de sons (S17, S25, S48, ou S58) conformément à un rapport de mouvement d'accélération (ak) indiqué par les données d'entrée d'opération d'accélération.

**19.** Support de mémorisation sur lequel est enregistré un programme de jeu selon la revendication 11, dans lequel :

l'étape d'entrée (S12 ou S42) entre des données d'entrée d'opération de décélération pour décélérer le mouvement de l'objet à un rapport arbitraire de vitesse conformément à un niveau d'opération désigné par le joueur via la section d'opération (6), et

l'étape de commande de sortie de sons (S17, S25, S48, ou S58) inclut une étape de correction de fréquence de sons de décélération (S55) pour corriger une fréquence des données de sons de décélération (Dd) lues à l'étape de lecture de données de sons (S17, S25, S48, ou S58) conformément à un rapport de mouvement de décélération (bk) indiqué par les données d'entrée d'opération de décélération.

20. Support de mémorisation sur lequel est enregistré un programme de jeu selon la revendication 11, dans lequel :

l'objet est un véhicule, et
le paramètre d'action correspond à une vitesse du véhicule.

F I G. 1

# F I G. 2

# F I G. 3

MAIN MEMORY 33

### PROGRAM STORAGE REGION 331

| GAME MAIN PROCESSING PROGRAM |
| ACCELERATOR OPERATION PROGRAM |
| BRAKING OPERATION PROGRAM |
| ENGINE REVOLUTION COUNT CALCULATING PROGRAM |
| ACCELERATION SOUND READ ADDRESS CALCULATING PROGRAM |
| ACCELERATION SOUND FREQUENCY CORRECTING PROGRAM |
| DECELERATION SOUND READ ADDRESS CALCULATING PROGRAM |
| DECELERATION SOUND FREQUENCY CALCULATING PROGRAM |
| SOUND DATA READING PROGRAM |
| SOUND OUTPUTTING PROGRAM |
| ⋮ |

### DATA STORAGE REGION 332

| ACCELERATOR OPERATION DATA BUFFER |
| BRAKING OPERATION DATA BUFFER |
| ACCELERATION AND DECELERATION SOUND DATA ADDRESS |

| ACCELERATION RANGE ADDRESS |
| HIGH AND CONSTANT SPEED RANGE ADDRESS |
| DECELERATION RANGE ADDRESS |
| IDLING RANGE ADDRESS |

⋮

F I G. 4 A

AMPLITUDE

ACCELERATION RANGE

0       t1     t2

TIME

HIGH AND CONSTANT
SPEED RANGE

F I G. 4 B

HIGH AND
CONSTANT
SPEED RANGE

ACCELERATION RANGE

v

SPEED

0

0       t1     t2

TIME

F I G. 5 A

AMPLITUDE

ID
RANGE

DECELERATION RANGE

0          t1   t2

TIME

F I G. 5 B

ID
RANGE

DECELERATION RANGE

v

SPEED

0

0          t1   t2

TIME

# F I G. 6

ARAM 35

### ACCELERATION SOUND DATA STORAGE REGION 351

| ADDRESS Au | ACCELERATION SOUND DATA Du |
|---|---|
| Au0 | Du0 |
| Au1 | Du1 |
| Au2 | Du2 |
| Au3 | Du3 |
| ⋮ | ⋮ |
| Au(m−2) | Du(m−2) |
| Au(m−1) | Du(m−1) |
| Au(m) | Du(m) |
| Au(m+1) | Du(m+1) |
| ⋮ | ⋮ |
| Au(n−2) | Du(n−2) |
| Au(n−1) | Du(n−1) |

ACCELERATION RANGE

HIGH AND CONSTANT SPEED RANGE

### DECELERATION SOUND DATA STORAGE REGION 352

| ADDRESS Ad | DECELERATION SOUND DATA Dd |
|---|---|
| Ad0 | Dd0 |
| Ad1 | Dd1 |
| Ad2 | Dd2 |
| Ad3 | Dd3 |
| ⋮ | ⋮ |
| Ad(m−2) | Dd(m−2) |
| Ad(m−1) | Dd(m−1) |
| Ad(m) | Dd(m) |
| Ad(m+1) | Dd(m+1) |
| ⋮ | ⋮ |
| Ad(n−2) | Dd(n−2) |
| Ad(n−1) | Dd(n−1) |

DECELERATION RANGE

IDLING RANGE

F I G. 7

EP 1 477 210 B1

# F I G. 8

SPEED

vmax

0

0

t1

t1

TIME

LOOP-
REPRODUCTION
OF IDLING
RANGE

REPRODUCTION OF
ACCELERATION RANGE

LOOP-
REPRODUCTION
OF HIGH AND
CONSTANT
SPEED RANGE

REPRODUCTION OF
DECELERATION RANGE

LOOP-
REPRODUCTION
OF IDLING
RANGE

# F I G. 9

SPEED

vmax

v1

v2

0

0

TIME

LOOP-
REPRODUCTION
OF IDLING
RANGE

REPRODUCTION
UP TO SOME
POINT IN
ACCELERATION
RANGE

REPRODUCTION
FROM SOME
POINT IN
ACCELERATION
RANGE

LOOP-REPRODUCTION OF HIGH
AND CONSTANT SPEED RANGE

REPRODUCTION FROM ONE
POINT TO ANOTHER IN
DECELERATION RANGE

EP 1 477 210 B1

F I G. 1 0

```
                    START

S41
          ENGINE RUNNING ?          no
                                          END
               yes
S42
          ACCELERATOR OPENED ?       no
               yes
S43
  CALCULATE ACCELERATION
  SOUND REPRODUCTION START
  ADDRESS

S44
          MAXIMUM SPEED ?      no
                                    S45
               yes                  ACCELERATOR OPENING
S50                                 DEGREE CORRECTION PROCESS
  ACCELERATOR OPENING               S46
  DEGREE CORRECTION PROCESS         FREQUENCY CORRECTION
S51                                 PROCESS
  SOUND LEVEL CORRECTION            S47
  PROCESS                           SOUND LEVEL CORRECTION
S52                                 PROCESS
  LOOP SOUND                        S48
  REPRODUCTION PROCESS              SOUND REPRODUCTION
                                    PROCESS

                          yes  S49
                                    OPERATION         no
                                    CHANGED ?

S53
  CALCULATE DECELERATION SOUND
  REPRODUCTION START ADDRESS

S54
          IDLING ?           no
                                    S55
               yes                  BRAKING INTENSITY
S60                                 CORRECTION PROCESS
  SOUND LEVEL CORRECTION            S56
  PROCESS                           FREQUENCY CORRECTION
S61                                 PROCESS
  LOOP SOUND REPRODUCTION           S57
  PROCESS                           SOUND LEVEL CORRECTION
                                    PROCESS
                                    S58
                                    SOUND REPRODUCTION
                                    PROCESS

                          yes  S59
                                    OPERATION         no
                                    CHANGED ?
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5734726 A

- JP 2000010576 A